# EUROPÄISCHE PATENTSCHRIFT

(11) **EP 2 962 015 B1**
(45) Veröffentlichungstag und Bekanntmachung des Hinweises auf die Patenterteilung: **01.04.2020**
(21) Anmeldenummer: 14713043.9
(22) Anmeldetag: 25.02.2014
(51) Int. Cl.: F16H 25/12

(54) **VORRICHTUNG ZUM ERZEUGEN ODER WANDELN EINES DREHMOMENTS**
DEVICE FOR GENERATING OR CONVERTING TORQUE
DISPOSITIF POUR PRODUIRE OU CONVERTIR UN COUPLE

(30) Priorität: 26.02.2013 DE 102013203159
(43) Veröffentlichungstag der Anmeldung: 06.01.2016
(73) Patentinhaber: Thien, Gerhard, 15848 Beeskow (DE)
(72) Erfinder: Thien, Gerhard, 15848 Beeskow (DE)
(74) Vertreter: Maikowski & Ninnemann Patentanwälte Partnerschaft mbB
(86) Internationale Anmeldenummer: PCT/EP2014/053621
(87) Internationale Veröffentlichungsnummer: WO 2014/131754

(56) Entgegenhaltungen:
- WO-A2-2010/084153
- US-A1- 2004 149 122

## Beschreibung

Die Erfindung betrifft eine Vorrichtung zum Erzeugen oder Wandeln eines Drehmoments nach dem Oberbegriff des Anspruchs 1.

Eine derartige Vorrichtung umfasst ein Kolbenelement, ein relativ zum Kolbenelement um eine Drehachse drehbares Abtriebselement und ein Führungselement, das das Abtriebselement derart führt, dass das Abtriebselement im Betrieb der Vorrichtung bei Antreiben des Abtriebselements gleichzeitig eine Drehbewegung um die Drehachse und eine lineare Bewegung in Form einer periodischen Hubbewegung entlang der Drehachse relativ zum Kolbenelement ausführt.

Eine derartige Vorrichtung ist beispielsweise aus der WO 2010/084153 A2 bekannt, deren Inhalt in den vorliegenden Text vollumfänglich mit einbezogen werden soll.

Die aus der WO 2010/084153 A2 bekannte Vorrichtung kann als Verbrennungsmotor oder auch z. B. als Kompressor oder Pumpe Verwendung finden. Bei Verwendung als Verbrennungsmotor wird ein Brennstoff in den vom Kolbenelement und Abtriebselement begrenzten Raum gegeben und dort gezündet, um auf diese Weise die Hubbewegung des Abtriebselements anzutreiben. Gleichzeitig mit der Hubbewegung führt dabei das Abtriebselement eine der Hubbewegung überlagerte Drehbewegung aus, die abgeleitet und zum Antreiben weiterer Teile, beispielsweise von Rädern eines Fahrzeugs, verwendet werden kann. Bei Verwendung als Kompressor wird ein Fluid in dem Raum komprimiert. Bei Verwendung als Pumpe wird mittels der periodischen Hubbewegung ein Fluid, beispielsweise Wasser oder eine andere Flüssigkeit oder auch ein gasförmiges Fluid, gefördert.

Dass das Abtriebselement eine gleichzeitige Drehbewegung und lineare Hubbewegung zu dem Kolbenelement ausführt, wird dadurch erreicht, dass das Abtriebselement mit dem Führungselement zwangsgekoppelt ist. Diese Zwangskopplung bewirkt, dass beispielsweise bei Verwendung der Vorrichtung als Verbrennungsmotor eine lineare Hubbewegung - infolge eines Verbrennungsvorgangs in einem durch das Kolbenelement und das Abtriebselement begrenzten Brennraums - in eine Drehbewegung umgesetzt wird, indem das Abtriebselement beispielsweise entlang einer geeigneten Führungskontur an dem Führungselement läuft. Dadurch, dass die Hubbewegung periodisch ist, kommt es hierbei periodisch zu einer Richtungsumkehr in der Hubbewegung des Abtriebselements, infolge derer das Abtriebselement zumindest in bestimmten Momenten an einem Scheitelpunkt der Führungskontur steht, in dem eine Kraftübertragung auf das Abtriebselement zum Antreiben der Drehbewegung des Abtriebselements nicht oder zumindest nur eingeschränkt oder in ungünstiger Weise erfolgt. Zudem kann es abhängig von der Ausgestaltung der Führungskontur am Scheitelpunkt der Hubbewegung zu einer erhöhten Belastung an Abschnitten der Führungskontur kommen, weil die Kraftwirkung und -richtung zwischen dem Abtriebselement und dem Führungselement gegebenenfalls ungünstig ist.

Aufgabe der vorliegenden Erfindung ist es, eine Vorrichtung zum Erzeugen oder Wandeln eines Drehmoments bereitzustellen, bei der eine vorteilhafte Kraftwirkung zwischen einem Führungselement und einem Abtriebselement bei Ausführung einer periodischen Hubbewegung des Abtriebselements gewährleistet werden kann.

Diese Aufgabe wird durch einen Gegenstand mit den Merkmalen des Anspruchs 1 gelöst.

Demnach ist ein entlang der Drehachse verschiebbar an dem Führungselement geführtes Übertragungselement vorgesehen, das mit dem Abtriebselement in Anlage ist und während einer Periode der periodischen Hubbewegung des Abtriebselements in einer ersten Bewegungsphase ortsfest zu dem Führungselement gehalten und in einer zweiten Bewegungsphase zusammen mit dem Abtriebselement entlang der Drehachse bewegt wird.

Die vorliegende Erfindung geht von dem Gedanken aus, ein zusätzliches Übertragungselement vorzusehen, das abhängig von Bewegungsphasen des Abtriebselements eine zusätzliche Führung für das Abtriebselement relativ zu dem Führungselement bereitstellt. Grundsätzlich ist es hierbei so, dass das Abtriebselement an dem Führungselement zwangsgeführt ist und bei Ausführen einer periodischen Hubbewegung gleichzeitig eine Drehbewegung um die Drehachse ausführt. Die periodische Hubbewegung wird somit unter Zwangsführung von der Drehbewegung überlagert, so dass bei Antreiben des Abtriebselements zum Ausführen einer Hubbewegung gleichzeitig eine Drehbewegung erzeugt und auf ein anzutreibendes Bauteil übertragen werden kann. Weil die Zwangsführung des Abtriebselements an dem Führungselement - beispielsweise durch eine Kopplung des Abtriebselement mit dem Führungselement über einen geeigneten Nuteingriff oder über geeignete Führungskonturen - Scheitelpunkte aufweist (entsprechend den Endlagen bei der Hin- und Rückbewegung des Abtriebselements), wird das zusätzliche Übertragungselement vorgesehen, das in solchen Bewegungsphasen, in denen das Risiko einer ungünstigen Kraftwirkung zwischen dem Abtriebselement und dem Führungselement besteht, eine zusätzliche Führung des Abtriebselements an dem Führungselement bereitstellt und auf diese Weise die Führungseigenschaften verbessert.

Dazu wird das Übertragungselement in der ersten Bewegungsphase während einer Periode der periodischen Hubbewegung an dem Führungselement festgehalten, so dass über das Übertragungselement eine zusätzliche Führung für das Abtriebselement bereitgestellt wird. In der zweiten Bewegungsphase hingegen wird das Übertragungselement nicht an dem Führungselement festgehalten und kann somit längs entlang der Drehachse zu dem Führungselement verschoben werden, so dass bei der Hubbewegung des Abtriebselements das Übertragungselement mitbewegt wird und somit nicht zum Versetzen des Abtriebselements in seine Drehbewegung beiträgt.

Das Abtriebselement ist vorteilhafterweise über eine erste Führungskontur an einem Führungsabschnitt des Führungselements geführt, wobei die erste Führungskontur bei linearer Bewegung des Abtriebselements entlang der Drehachse das Abtriebselement in eine Drehbewegung um die Drehachse versetzt. Zusätzlich ist vorteilhafterweise das Abtriebselement über eine zweite Führungskontur an dem Übertragungselement geführt, wobei die erste Führungskontur und die zweite Führungskontur beispielsweise radial zur Drehachse zueinander versetzt sind. Das Führungselement und das Übertragungselement stellen somit über unterschiedliche Führungskonturen eine Führung für das Abtriebselement bereit, wobei die Führungskontur des Übertragungselements ständig in Anlage mit dem Abtriebselement ist, dabei aber nur bewegungsphasenabhängig - nämlich nur dann, wenn das Übertragungselement ortsfest an dem Führungselement festgesetzt ist - eine Kraftwirkung auf das Abtriebselement zum Versetzen des Abtriebselements in seine Drehbewegung um die Drehachse entfaltet.

Das Übertragungselement ist vorteilhafterweise an dem Abtriebselement zwangsgeführt und somit mit dem Abtriebselement zwangsgekoppelt. Dazu kann das Übertragungselement beispielsweise mit einem Zapfen an einer Nut des Abtriebselements geführt sein, so dass das Übertragungselement bewegungsphasenabhängig mit dem Abtriebselement bewegt wird.

In vorteilhafter Ausgestaltung ist an dem Führungselement eine Feststelleinrichtung zum Feststellen des Übertragungselements relativ zu dem Führungselement in Abhängigkeit von einer axialen Position des Abtriebselements entlang der Drehachse vorgesehen. Mittels der Feststelleinrichtung wird bewirkt, dass in der ersten Bewegungsphase das Übertragungselement an dem Führungselement ortsfest gehalten ist. In der zweiten Bewegungsphase gibt die Feststelleinrichtung das Übertragungselement frei, so dass das Übertragungselement entlang der Drehachse verschoben werden kann.

Das Kolbenelement und das Abtriebselement begrenzen einen Raum, dessen Volumen sich bei der linearen Bewegung des Abtriebselements relativ zum Kolbenelement periodisch verändert. Durch Bereitstellung des Raums kann die Vorrichtung beispielsweise als Verbrennungsmotor Verwendung finden. In diesem Fall dient der Raum als Brennraum, in dem ein Brennstoff in geeigneter Weise gezündet wird und dadurch das Abtriebselement zur Ausführung der Hubbewegung angetrieben wird. Bei Verwendung der Vorrichtung als Kompressor dient der Raum als Kompressionsraum, in dem ein Fluid komprimiert wird.

Vorteilhafterweise begrenzt das Übertragungselement zusammen mit dem Führungselement einen weiteren, zweiten Raum, dessen Volumen sich bei der Bewegung des Übertragungselements ändert. Dieser Raum, der sich in seinem Volumen bewegungsphasenabhängig ändert, kann beispielsweise zur Vorverdichtung eines Fluids genutzt werden, so dass ein Fluid zunächst in dem weiteren, zweiten Raum vorverdichtet und dann in einem bereits vorverdichteten Zustand in den Raum zwischen dem Abtriebselement und dem Kolbenelement eingeleitet wird, um dort zum Beispiel einen Verbrennungsvorgang zu erfahren. Dies kann den Wirkungsgrad der Vorrichtung deutlich erhöhen und ermöglicht eine vorteilhafte Verwendung der Vorrichtung als Verbrennungsmotor im Zweitaktverfahren (als Zweitakter).

Die Vorrichtung weist in einer vorteilhaften Ausgestaltung vier unterschiedliche Bewegungsphasen auf. In einer ersten Bewegungsphase wird das Abtriebselement aus einer ersten Endlage in eine erste Richtung entlang der Drehachse bewegt und ist dabei an dem festgehaltenen Übertragungselement derart geführt, dass das Abtriebselement in eine Drehbewegung um die Drehachse versetzt wird. In der ersten Bewegungsphase, in der sich ein durch das Abtriebselement und das Kolbenelement begrenzter Raum ausgehend von einem Minimalvolumen vergrößert, wird das Abtriebselement - zusätzlich zur Führung über das Führungselement - auch an dem Übertragungselement geführt, so dass eine vorteilhafte Kraftwirkung zum Versetzen des Abtriebselements in die Drehbewegung besteht, insbesondere und gerade auch im Scheitelpunkt der Hubbewegung im Bereich der ersten Endlage. Ab einer vorbestimmten axialen Position des Abtriebselements wird das Übertragungselement dann in einer zweiten Bewegungsphase freigegeben und zusammen mit dem Abtriebselement in die erste Richtung entlang der Drehachse bewegt. In der zweiten Bewegungsphase wird das Übertragungselement somit nicht mehr an dem Führungselement festgehalten, sondern wird zusammen mit dem Abtriebselement bewegt. Das Übertragungselement trägt in dieser Bewegungsphase nicht dazu bei, die Hubbewegung des Abtriebselements in die Drehbewegung um die Drehachse umzusetzen. In einer dritten Bewegungsphase nach Erreichen einer zweiten Endlage wird das Abtriebselement dann in eine der ersten Richtung entgegengesetzte, zweite Richtung bewegt, wobei das Übertragungselement in einer zum Führungselement ortsfesten Stellung verbleibt. Das Übertragungselement wird hierbei nicht (aktiv) an dem Führungselement gehalten. Es erfährt jedoch keine Kraft, die es mit dem Abtriebselement zusammen zurückbewegen würde, so dass das Übertragungselement in seiner Stellung zum Führungselement verbleibt. In einer vierten Bewegungsphase wird das Abtriebselement dann zusammen mit dem Übertragungselement in die zweite Richtung bewegt und somit vom Abtriebselement mitgenommen, bis das Abtriebselement (wieder) seine erste Endlage erreicht und die Bewegungsphasen erneut ablaufen. Das Mitnehmen des Übertragungselements erfolgt hierbei aufgrund der Zwangskopplung des Übertragungselements mit dem Abtriebselement, die bewirkt, dass das Übertragungselement zusammen mit dem Abtriebselement in die zweite Richtung verschoben wird.

In der dritten und vierten Bewegungsphase verkleinert sich der durch das Abtriebselement und das Kolbenelement begrenzte Raum, so dass - bei Verwendung der Vorrichtung als Verbrennungsmotor - keine antreibende Kraft auf das Abtriebselement durch einen Brennvorgang in dem Raum ausgeübt wird. Durch Verkleinerung des Raums kann vielmehr ein Fluid (z.B. Luft) in dem Raum zur Ausführung eines nächsten Verbrennungsvorgangs komprimiert oder Abgase können abgeführt werden.

Bei sämtlichen Bewegungsphasen ist das Abtriebselement in flächiger Anlage mit dem Übertragungselement, beispielsweise über eine Anlage an einer Führungskontur des Übertragungselements. Aufgrund der flächigen Anlage wird insbesondere in der ersten Bewegungsphase eine vorteilhafte zusätzliche Führung des Abtriebselements relativ zu dem Führungselement bereitgestellt, die eine vorteilhafte Kraftwirkung zum Versetzen des Abtriebselements in seine Drehbewegung bewirkt.

Das Führungselement kann beispielsweise als zylindrische Hohlwelle ausgestaltet sein, in der das zylindrisch ausgebildete Abtriebselement geführt ist. Das Führungselement umgreift somit das Abtriebselement und führt in einer zentralen Bohrung der das Führungselement verwirklichenden zylindrischen Hohlwelle das zylindrische Abtriebselement, wobei aufgrund der Zwangskopplung eine Hubbewegung des Abtriebselements in der zylindrischen Hohlwelle von einer Drehbewegung um die Drehachse überlagert ist.

Das Führungselement kann in einer konkreten Ausgestaltung beispielsweise zwei Führungsabschnitte aufweisen, die an der inneren Wandung der zylindrischen Hohlwelle feststehend angeordnet sind und somit in die innere Bohrung der Hohlwelle hineinragen. Axial zwischen den Führungsabschnitten ist das Abtriebselement angeordnet, wobei jeder Führungsabschnitt an einer dem Abtriebselement zugewandten Stirnseite eine Führungskontur trägt, die mit einer zugeordneten Führungskontur an einer Stirnseite des Abtriebselements in Anlage ist. Die Führungskonturen können jeweils zumindest abschnittsweise eine Sinus- oder Helixkurve nachbilden, wobei die Führungskonturen an den beiden Führungsabschnitten - betrachtet in Umfangsrichtung um die Drehachse - zueinander phasenversetzt sind, um das Abtriebselement bei Ausführung einer Hubbewegung zu einer überlagerten Drehbewegung zu zwingen.

Das Abtriebselement ist in einer konkreten Ausgestaltung als zylindrische Hohlwelle ausgestaltet, in die das Kolbenelement eingreift. Das Abtriebselement kann hierbei beispielsweise auch mit zwei Kolbenelementen zusammenwirken und zusammen mit den zwei Kolbenelementen zwei Räume begrenzen. Hierbei kann ein Kolbenelement sich von einer axial ersten Seite in das als zylindrische Hohlwelle ausgestaltete Abtriebselement hinein erstrecken, während das andere Kolbenelement von der axial anderen Seite sich in das Abtriebselement hinein erstreckt. Das Abtriebselement begrenzt somit mit dem ersten Kolbenelement einen ersten Raum und mit dem zweiten Kolbenelement einen zweiten Raum, wobei das Abtriebselement eine quer zur Drehachse erstreckte Trennwand zum Trennen der beiden Räume aufweist. Bei der linearen Bewegung des Abtriebselements entlang der Drehachse im Betrieb der Vorrichtung ändern sich dann die Volumen der beiden Räume periodisch, wobei die Volumenänderung entgegengesetzt zueinander erfolgt. Eine Volumenvergrößerung des einen Raums geht somit mit einer Volumenverkleinerung des anderen Raums einher. Nimmt der eine Raum sein Maximalvolumen ein, so weist der andere Raum sein Minimalvolumen auf.

In einer Weiterbildung weist die Vorrichtung eine Einstellvorrichtung auf, mittels derer das Kolbenelement axial entlang der Drehachse in seiner axialen Position relativ zu dem Basisteil einstellbar ist. Dies geht von dem Gedanken aus, das Kolbenelement nicht starr und ortsfest an einem Basisteil anzuordnen, sondern mittels der Einstellvorrichtung axial entlang der Drehachse variabel einstellbar zu gestalten. Durch Einstellen der axialen Position des Kolbenelements kann das Minimalvolumen und das Maximalvolumen, zwischen denen sich das Volumen des Raums bei der linearen Bewegung des Abtriebselements periodisch im Betrieb der Vorrichtung verändert, eingestellt werden. Durch Einstellen des Kolbenelements in seiner axialen Position kann somit die Grundposition des Kolbenelements an dem Basisteil vorgegeben werden, wobei durch Verstellen des Kolbenelements das Minimalvolumen und das Maximalvolumen des Raums im Betrieb der Vorrichtung vorgegeben werden können.

Die Einstellvorrichtung kann beispielsweise eine drehbar an dem Basisteil angeordnete Spindel aufweisen, die zum Einstellen der axialen Position des Kolbenelements mit dem Kolbenelement in Wirkverbindung steht derart, dass bei einer Drehbewegung der Spindel die axiale Position des Kolbenelements entlang der Drehachse verstellt wird. Die Spindel trägt vorzugsweise zumindest an einem Abschnitt ein Außengewinde, das mit einen dem Kolbenelement zugeordneten Gewindeabschnitt in Eingriff steht. Der Gewindeabschnitt kann beispielsweise an einer Halterung vorgesehen sein, über die das Kolbenelement an den Basisteil gehalten ist. Durch Verdrehen der Spindel und durch den Gewindeeingriff zwischen dem Außengewinde der Spindel und dem Gewindeabschnitt der Halterung kann dann das Kolbenelement axial entlang der Drehachse verstellt werden, um auf diese Weise die axiale Position des Kolbenelements und damit die Position des Kolbenelements relativ zu dem Abtriebselement vorzugeben.

Die Spindel weist vorzugsweise einen Verzahnungsabschnitt auf, der mit einem Betätigungsmittel in Eingriff steht und mittels des Betätigungsmittels verdrehbar ist. Das Betätigungsmittel kann beispielsweise als manuell zu betätigende Kurbel ausgebildet sein, wobei die Kurbel an einer Betätigungswelle eine Schneckenverzahnung trägt, die mit dem Verzahnungsabschnitt der Spindel in Eingriff steht. Durch Verdrehen der Kurbel kann dann über den Verzahnungseingriff zwischen der Schneckenverzahnung und dem Verzahnungsabschnitt die Spindel um die Drehachsen verdreht werden.

Bei einer Verkleinerung des Volumens des durch das Abtriebselement und das Kolbenelement gebildeten Raums wird ein in dem Raum befindliches Fluid komprimiert. Dies erfolgt aufgrund der periodischen Hubbewegung des Abtriebselements relativ zum Kolbenelement periodisch (auf eine Verkleinerung des Raums folgt immer eine Vergrößerung des Raums), wobei das Abtriebselement gleichzeitig mit der linearen Hubbewegung eine überlagerte Drehbewegung um seine Drehachse ausführt.

Bei Verwendung der Vorrichtung als Verbrennungsmotor kann durch Zünden eines in dem Raum komprimierten Fluids das Abtriebselement zur Durchführung der Hubbewegung angetrieben werden, wobei die gleichzeitig ausgeführte Drehbewegung zum Antreiben nachgeschalteter Teile, beispielsweise zum Antreiben von Rädern eines Fahrzeugs, abgeleitet werden kann.

Bei Verwendung der Vorrichtung als Kompressor oder als Pumpe kann das Abtriebselement beispielsweise in eine Drehbewegung versetzt werden, wobei der Kompressions- oder Pumpvorgang durch die überlagerte periodische Hubbewegung bewirkt wird.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Ansicht eines weiteren Ausführungsbeispiels einer als Verbrennungsmotor ausgebildeten Vorrichtung zum Erzeugen eines Drehmoments;
- Fig. 2A-C: eine Seitenansicht, eine Draufsicht und eine stirnseitige Ansicht der Vorrichtung gemäß Fig. 1;
- Fig. 3: eine perspektivische Ansicht der Vorrichtung gemäß Fig. 1, ohne ein Führungselement;
- Fig. 4A-C: eine Seitenansicht, eine Draufsicht und eine stirnseitige Ansicht der Anordnung gemäß Fig. 3;
- Fig. 5A: eine Draufsicht auf die Vorrichtung gemäß Fig. 1;
- Fig. 5B: eine Schnittansicht entlang der Linie A-A gemäß Fig. 5A;
- Fig. 5C: eine Schnittansicht entlang der Linie B-B gemäß Fig. 5B;
- Fig. 6: eine perspektivische Ansicht eines Kolbenelements mit daran angeordnetem Abtriebsrad der Vorrichtung gemäß Fig. 1;
- Fig. 7A-C: eine Seitenansicht, eine Draufsicht und eine stirnseitige Ansicht der Anordnung gemäß Fig. 6;
- Fig. 7D: eine Schnittansicht entlang der Linie C-C gemäß Fig. 7C;
- Fig. 7E: eine vergrößerte Ansicht des Ausschnitts A gemäß Fig. 7D;
- Fig. 8A-C: unterschiedliche Ansichten eines Abtriebselements der Vorrichtung gemäß Fig. 1;
- Fig. 9: eine Ansicht einer Spindel einer Einstellvorrichtung zum Einstellen der axialen Position zweier Kolbenelemente der Vorrichtung gemäß Fig. 1;
- Fig. 10A-10D: unterschiedliche Ansichten eines Ausführungsbeispiels einer Vorrichtung zum Erzeugen oder Wandeln eines Drehmoments;
- Fig. 11A: eine Draufsicht auf die Vorrichtung;
- Fig. 11B: eine Schnittansicht durch die Vorrichtung entlang der Linie A - A gemäß Fig. 11A;
- Fig. 12A - 12D: unterschiedliche gesonderte Ansichten eines Führungselements der Vorrichtung;
- Fig. 12E: eine Schnittansicht durch das Führungselement der Linie A - A gemäß Fig. 12D;
- Fig. 12F: eine Schnittansicht durch das Führungselement entlang der Linie B - B gemäß Fig. 12D;
- Fig. 12G: eine Schnittansicht des Führungselements entlang der Linie C - C gemäß Fig. 12D;
- Fig. 13A, 13B: unterschiedliche gesonderte Ansichten eines Abtriebselements der Vorrichtung;
- Fig. 13C: eine Schnittansicht des Abtriebselements entlang der Linie A - A gemäß Fig. 13B;
- Fig. 13D: eine Draufsicht auf das Abtriebselement;
- Fig. 13E: eine Schnittansicht entlang der Linie B - B gemäß Fig. 13D;
- Fig. 13F: eine Schnittansicht entlang der Linie C - C gemäß Fig. 13D;
- Fig. 13G: eine Schnittansicht entlang der Linie G - G gemäß Fig. 13D;
- Fig. 14A - 14C: unterschiedliche Ansichten eines Endstücks mit daran angeordnetem Übertragungsabschnitt des Abtriebselements;
- Fig. 14D: eine Schnittansicht des Endstücks mit daran angeordnetem Übertragungsabschnitt entlang der Linie A - A gemäß Fig. 14C;
- Fig. 14E: eine Ansicht des Endstücks mit daran angeordnetem Übertragungselement von vorne;
- Fig. 15A - 15C: unterschiedliche Ansichten eines Übertragungselements der Vorrichtung;
- Fig. 15D: eine Schnittansicht des Übertragungselements entlang der Linie A - A gemäß Fig. 15C;
- Fig. 15E: eine Ansicht des Übertragungselements von vorn;
- Fig. 16A, 16B: unterschiedliche Ansichten der Vorrichtung, ohne das Führungselement, Darstellung des Zusammenwirkens des Abtriebselements mit dem Übertragungselement; und
- Fig. 17A-17I: unterschiedliche Ansichten der Vorrichtung im Betrieb in unterschiedlichen Lagen des Abtriebselements und des Übertragungselements zueinander.

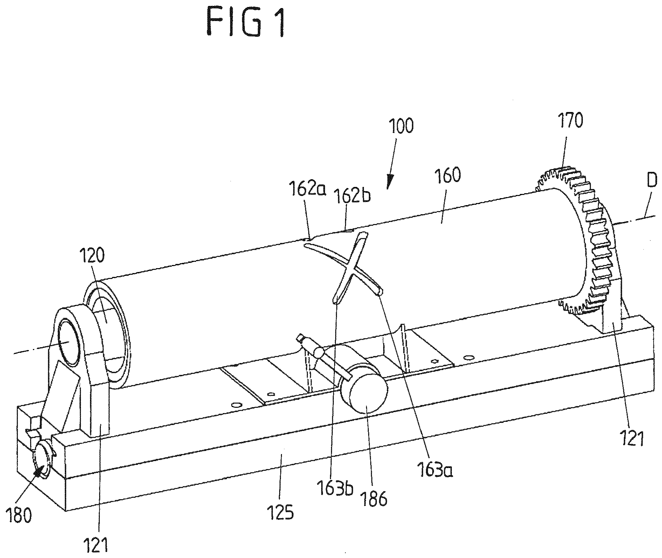

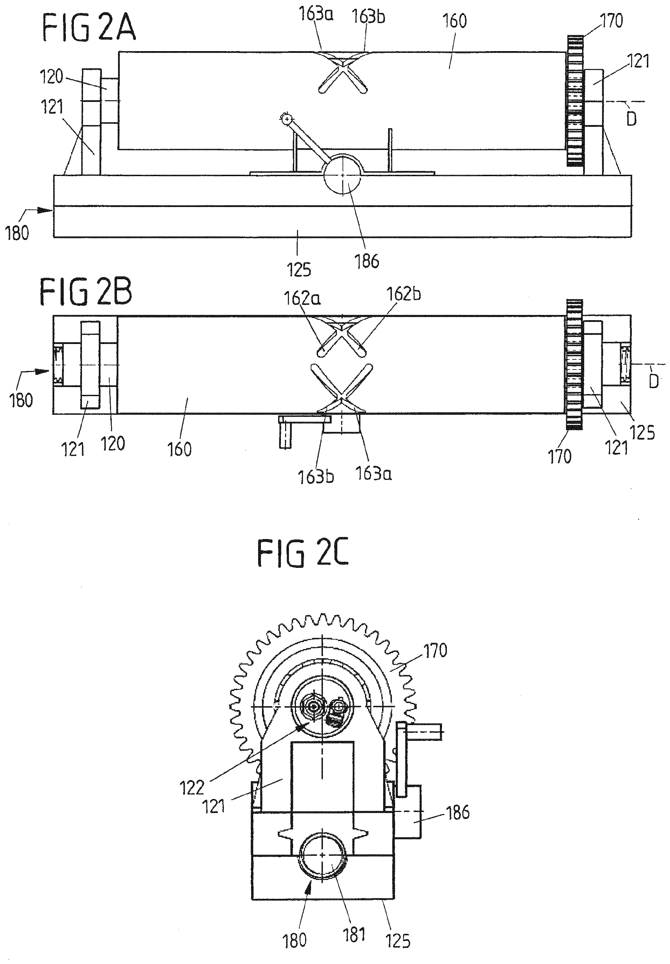

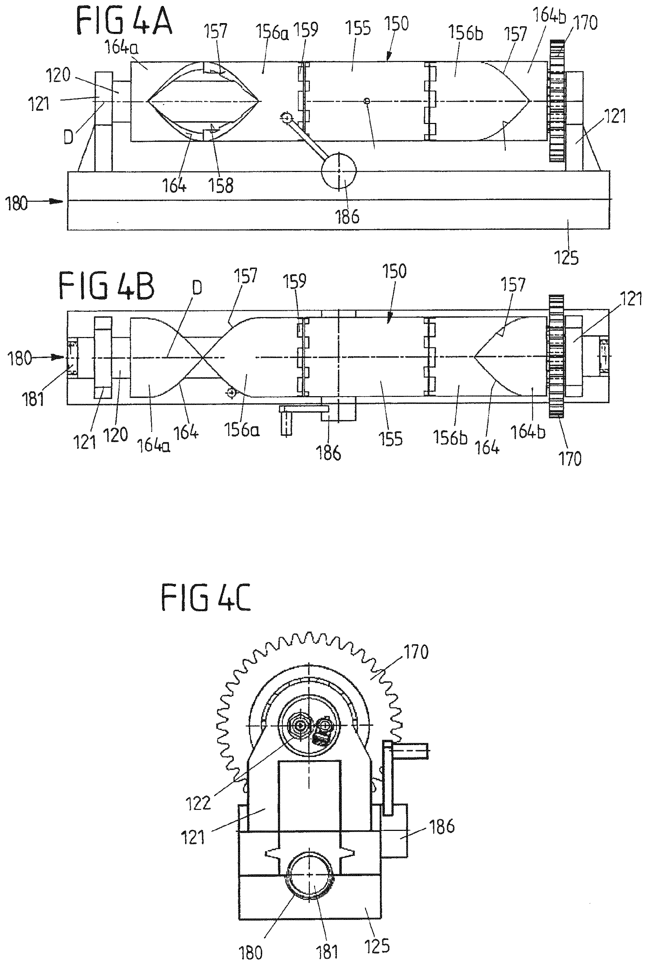

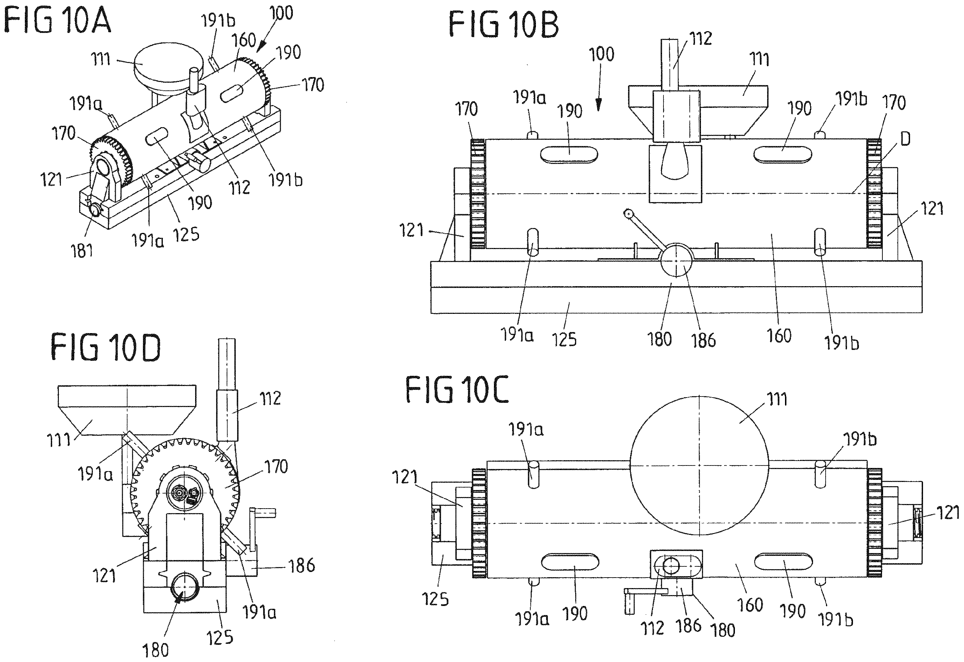

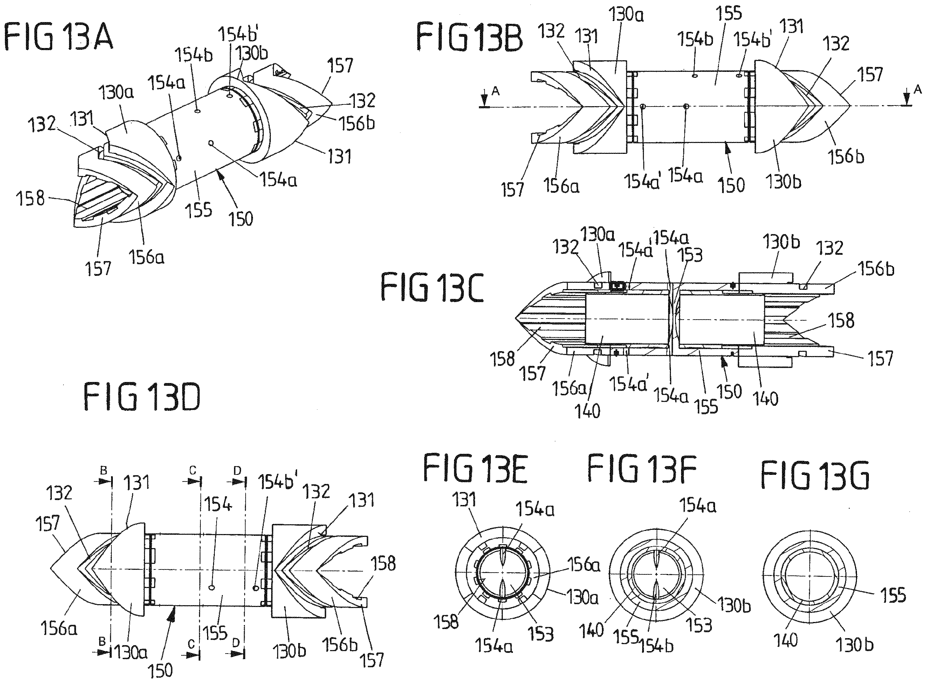

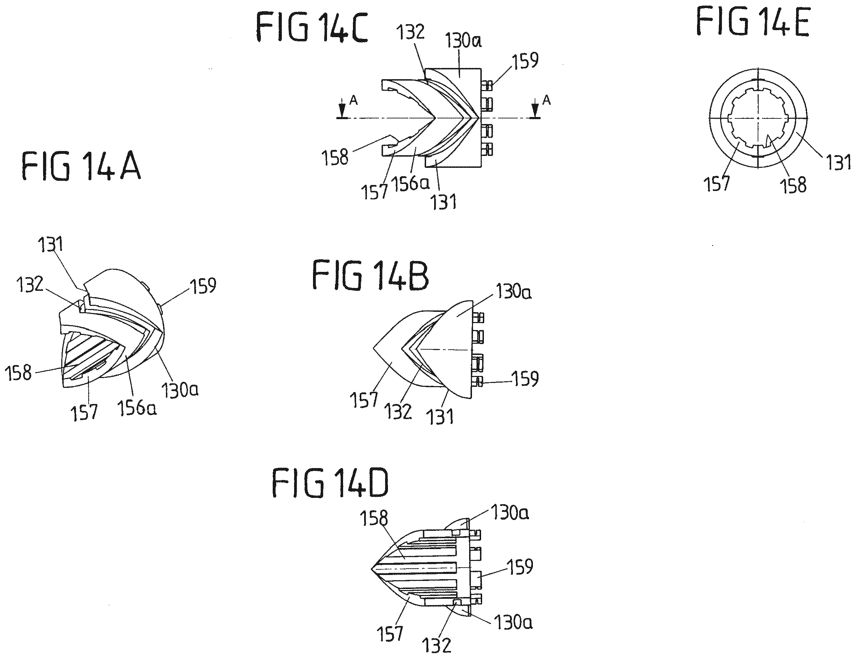

Zunächst soll anhand einer in Fig. 1 bis 9 dargestellten Vorrichtung der grundsätzliche Aufbau und die Funktionsweise einer Vorrichtung zum Erzeugen oder Wandeln eines Drehmoments der hier in Rede stehenden Art beschrieben werden. Bei der Vorrichtung gemäß Fig. 1 bis 9 ist jedoch ein Übertragungselement im Sinne der vorliegenden Erfindung nicht vorhanden. Dies soll anschließend anhand eines in Fig. 10 bis 17 dargestellten Ausführungsbeispiels erläutert werden.

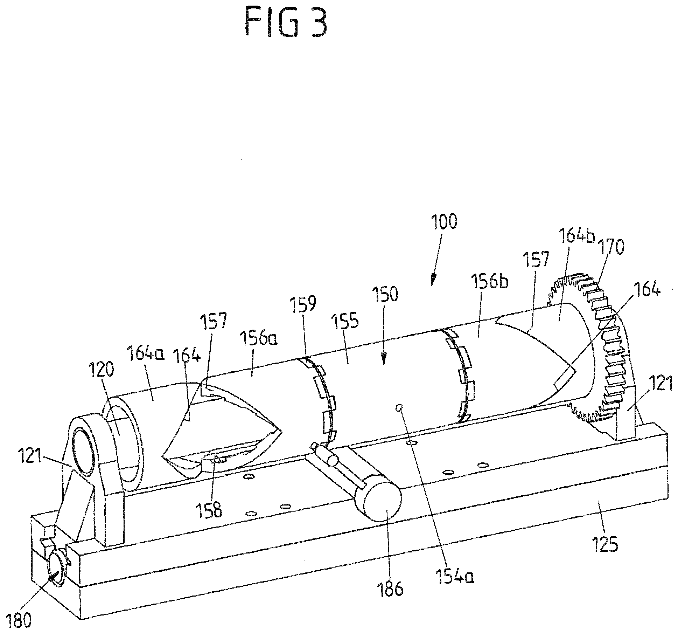

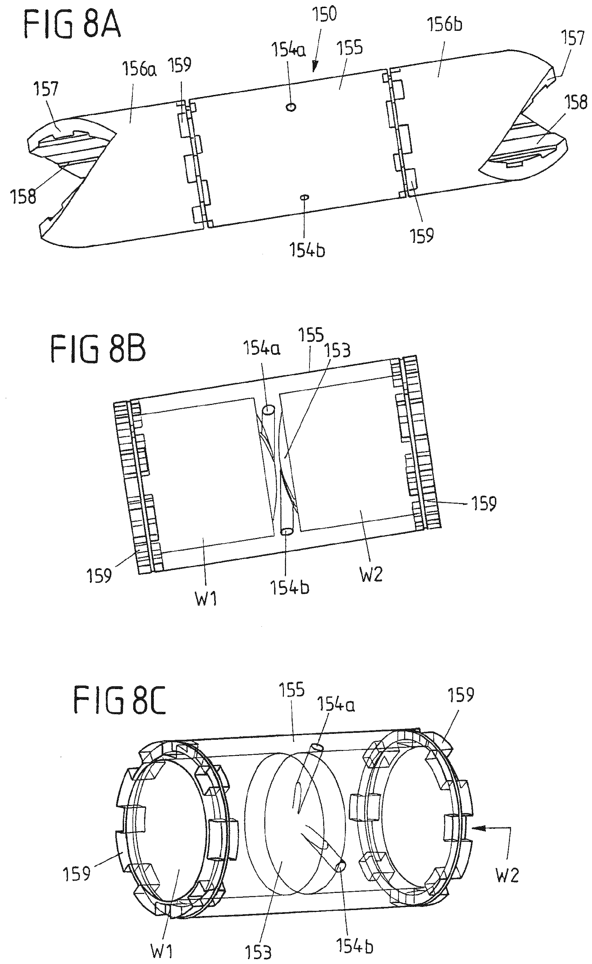

Die in Fig. 1 bis 9 dargestellte Vorrichtung 100 weist ein Abtriebselement 150 (siehe Fig. 3 und Fig. 8A bis 8C) auf, das in einem als zylindrische Hohlwelle ausgestalteten Führungselement 116 geführt ist. Das Abtriebselement 150 weist eine im Wesentlichen zylindrische Gestalt auf und ist durch ein Hohlwellenelement 155 sowie beidseitig axial daran anschließende Endstücke 156a, 156b gebildet. Wie aus Fig. 8A - 8C ersichtlich, ist das Hohlwellenelement 155 hierbei über Formschlusselemente 159 in fester Weise mit den Endstücken 156a, 156b verbunden, so dass sich ein einheitliches Abtriebselement 150 ergibt.

Das Hohlwellenelement 155 des Abtriebselements 150 dient zur Ausbildung zweier Räume W1, W2, die z. B. bei Ausgestaltung der Vorrichtung 100 als Verbrennungsmotor als Brennräume dienen. In die Räume W1, W2 (siehe Fig. 8B) ragt jeweils ein Kolbenelement 122 hinein, das über eine Welle 120 (auch als Pleuel bezeichnet) mit einer Halterung 121 verbunden und darüber an einem Basisteil 125 gehalten ist. Die Kolbenelemente 122 ragen hierbei von unterschiedlichen Seiten in das Hohlwellenelement 155 hinein, so dass sich im Inneren des Hohlwellenelements 155 zwei durch eine quer zur Drehachse D erstreckte Wand 153 des Abtriebselements 150 getrennte Räume W1, W2 ergeben.

Das Abtriebselement 150 ist in dem Führungselement 160 geführt. Die Führung des Abtriebselements 150 in dem Führungselement 160 ist dabei derart, dass eine lineare Hubbewegung des Abtriebselements 150 relativ zu den Kolbenelementen 122 von einer Drehbewegung des Abtriebselements 150 um die Drehachse D überlagert wird. Hierzu ist das Abtriebselement 150 mit dem Führungselement 160 aufgrund Wechselwirkung der Endstücke 156a, 156b mit zwei Führungsabschnitten 164a, 164b des Führungselements 160 zwangsgekoppelt.

Zur Herstellung der Zwangskopplung wirken die Endstücke 156a, 156b des Abtriebselements 150 über jeweils eine stirnseitig an den Endstücken 156a, 156b gebildete Führungskontur 157 mit jeweils einer stirnseitigen Führungskontur 164 der Führungsabschnitte 164a, 164b zusammen. Die Führungsabschnitte 164a, 164b sind fest mit dem Führungselement 160 verbunden und an einer inneren Wandung des als zylindrische Hohlwelle ausgestalteten Führungselements 160 angeordnet. Axial zwischen den Führungsabschnitten 164a, 164b ist das Abtriebselement 150 angeordnet derart, dass es über die Führungskonturen 157 der Endstücke 156a, 156b mit den Führungskonturen 164 der Führungsabschnitte 164a, 164b in Wechselwirkung ist.

Im Betrieb führt das Abtriebselement 150 eine periodische Hubbewegung entlang der Drehachse D relativ zu dem feststehend an dem Basisteil 125 angeordneten Führungselement 160 aus. Bei dieser periodischen Hubbewegung entlang der Drehachse D gleiten die Führungskonturen 157 der Endstücke 156a, 156b an den Führungskonturen 164 der Führungsabschnitte 164a, 164b entlang, so dass das Abtriebselement 150 in eine gleichzeitige, überlagerte Drehbewegung um die Drehachse D versetzt wird. In zwangsgekoppelter Weise führt das Abtriebselement 150 somit eine periodische Hubbewegung und eine überlagerte Drehbewegung um die Drehachse D aus.

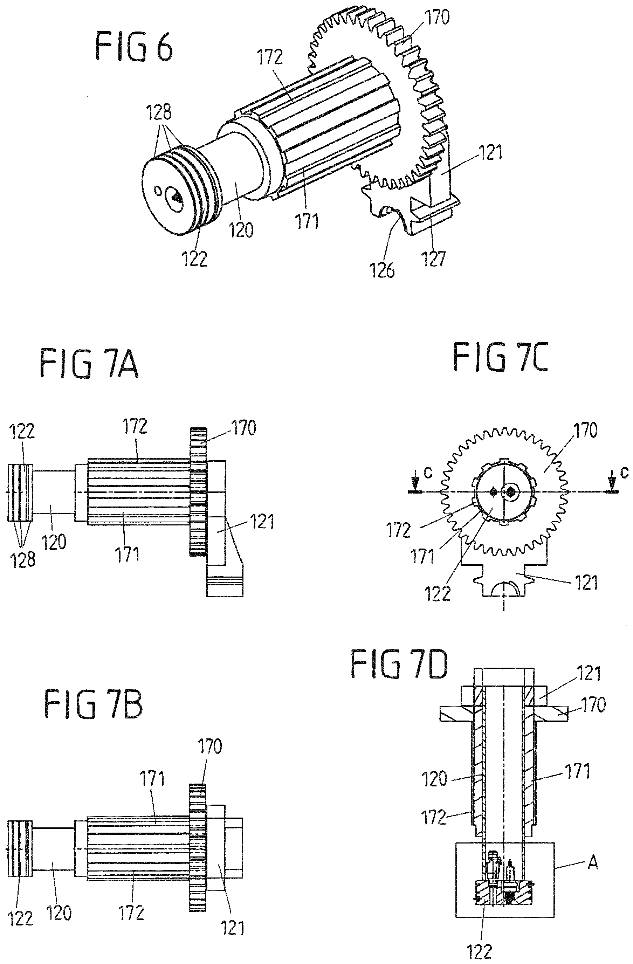

Die Endstücke 156a, 156b tragen eine Innenverzahnung 158, deren Zähne axial entlang der Drehachse D gerichtet sind. Über die Innenverzahnung 158 steht das Endstück 156b mit einem Abtriebsrad 170 in Wirkverbindung derart, dass das Abtriebselement 150 axial zu dem Abtriebsrad 170 bewegbar ist, eine Drehbewegung des Abtriebselements 150 aber in synchroner Weise auf das Abtriebsrat 170 übertragen wird. Das Abtriebsrad 170 ist hierzu an der Welle 120 des Kolbenelements 122 drehbar gelagert und steht über eine Außenverzahnung 172 einer fest mit dem Abtriebsrad 170 verbundenen Kopplungshülse 171 mit der Innenverzahnung 158 des Endstücks 156b in Eingriff (siehe Fig. 6 sowie Fig. 7A bis 7D).

Über das Abtriebsrad 170 kann - bei Verwendung der Vorrichtung 100 als Verbrennungsmotor - die Drehbewegung des Abtriebselements 150 abgeleitet werden, um ein anzutreibendes Bauteil, beispielsweise Räder eines Fahrzeugs, anzutreiben. Ebenso ist denkbar, das Abtriebselement 150 - bei Verwendung der Vorrichtung 100 als Kompressor oder als Pumpe - über das Abtriebsrad 170 (das in diesem Fall als Antriebsrad fungiert) anzutreiben, um eine periodische Hubbewegung zur Komprimierung eines Fluids oder zum Bewirken eines Pumpvorganges zu erzeugen.

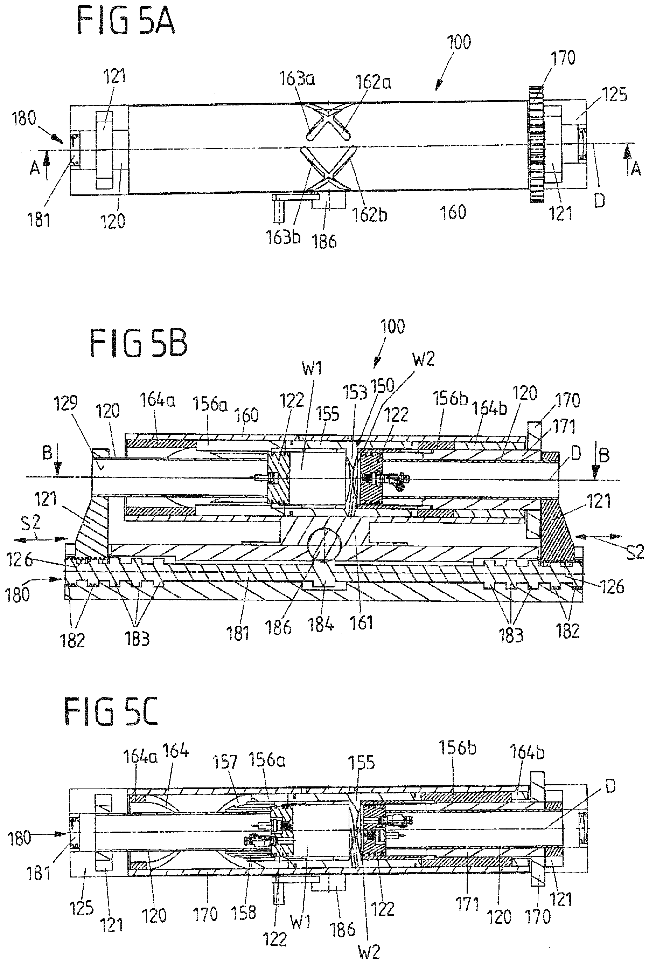

Das Kolbenelement 122, das an seiner äußeren, zylindrischen Mantelfläche umlaufende Dichtungsringe 128 zur Abdichtung des zugeordneten Raums W1, W2 trägt, ist wie gesagt über die Welle 120 mit einer Halterung 121 verbunden und über die Halterung 121 an dem Basisteil 125 gehalten. Die Halterung 121 ist hierbei, wie aus Fig. 6 ersichtlich, über Führungsstege 127 axial entlang der Drehachse D verstellbar an dem Basisteil 125 geführt und steht über einen Gewindeabschnitt 126 mit einem Außengewinde 182 einer Spindel 181 einer Einstellvorrichtung 180 in Wirkverbindung (siehe Fig. 5B).

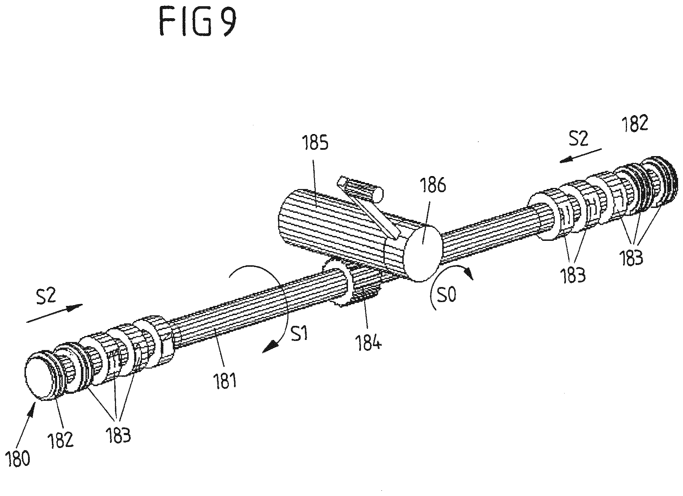

Die Einstellvorrichtung 180 dient zum Einstellen der axialen Position der Kolbenelemente 122. Die Einstellvorrichtung 180 weist eine Spindel 181 (siehe Fig. 5B und Fig. 9) auf, die drehbar an dem Basisteil 125 gelagert ist. Die Spindel 181 weist hierzu Lagerabschnitte in Form von ringförmigen Stegen 183 auf, über die die Spindel 181 drehbar und dabei axial festgelegt an dem Basisteil 125 angeordnet ist.

Die Spindel 181 trägt an ihren beiden Enden ringförmige Stege 183, an denen Außengewinde 182 angeordnet sein können. An jeweils den äußeren beiden dieser ringförmigen Stege 183 sind bei dem dargestellten Ausführungsbeispiel Außengewinde 182 angeordnet, die jeweils einer Halterung 121 und darüber einem Kolbenelement 122 zugeordnet sind. Die Außengewinde 182 an den beiden Enden der Spindel 181 sind hierbei gegenläufig, so dass bei einer Drehbewegung der Spindel 181 in eine Drehrichtung S1 (siehe Fig. 9) sich ein gegenläufiges Verstellen der Halterungen 121 und darüber der Kolbenelemente 122 beispielsweise nach innen in eine Verstellrichtung S2 ergibt.

Die Spindel 181 trägt weiterhin einen Verzahnungsabschnitt 184, der mit einer Schneckenverzahnung 185 eines Betätigungsmittels in Form einer Kurbel 186 in Eingriff steht. Wird das Betätigungsmittel in eine Drehrichtung S0 verdreht, so wird die Spindel 181 verdreht, und darüber werden die Kolbenelemente 122 in ihrer axialen Position verstellt.

Durch axiales Verstellen der Kolbenelemente 122 können das Minimalvolumen und das Maximalvolumen der Räume W1, W2 im Betrieb der Vorrichtung 100 vorgegeben werden. Auf diese Weise kann der Komprimierungsgrad (entsprechend dem Verhältnis zwischen dem Maximalvolumen und dem Minimalvolumen) vorgegeben werden, um eine gewünschte Betriebsweise der Vorrichtung 100 einzustellen.

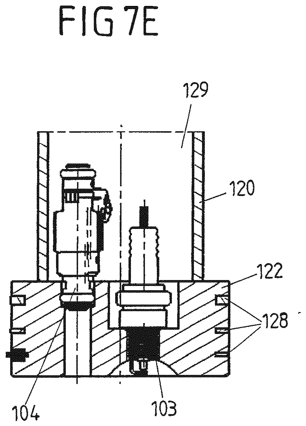

Bei dem dargestellten Beispiel sind an den Kolbenelementen 122 jeweils eine Einspritzdüse 104 und eine Zündkerze 103 (siehe Fig. 7E) angeordnet, die zum Einspritzen eines Brennstoffs in den zugeordneten Raum W1, W2 sowie zum Zünden des Brennstoffs in dem Raum W1, W2 dienen. Die Vorrichtung 100 verwirklicht somit einen Verbrennungsmotor zur Erzeugung eines Drehmoments und zum Antreiben beispielsweise eines Fahrzeugs oder eines anderen zu verstellenden Bauteils oder Geräts, z.B. einer Maschine.

Zuleitungen zu der Zündkerze 103 und der Einspritzdüse 104 können jeweils in der dem jeweiligen Kolbenelement 122 zugeordneten Welle 120 verlegt werden und erstrecken sich dann in einer inneren, zentralen Bohrung 129 der zugeordneten Welle 120. Dies ermöglicht eine platzsparende, bauraumeffiziente Anordnung der Zündkerze und der Einspritzdüse sowie damit verbundener Zuleitungen.

Grundsätzlich ist denkbar, an dem Kolbenelement 122 auch ein Einlassventil und ein Auslassventil zum Einlassen eines Fluids, beispielsweise Luft, und zum Auslassen eines Fluids, beispielsweise der Abgase nach erfolgter Verbrennung eines Brennstoffs, vorzusehen. Bei dem dargestellten Beispiel sind Einlassventile und Auslassventile für die Räume W1, W2 jedoch durch Durchlassöffnungen 162a, 162b, 163a, 163b an dem Führungselement 160 verwirklicht, die bei der Bewegung des Abtriebselements 150 im Betrieb der Vorrichtung 100 phasenweise in Wirkverbindung mit Durchlassöffnungen 154a, 154b des Abtriebselements 150 (siehe Fig. 8A bis 8C) treten. Die Durchlassöffnung 154a ist hierbei dem ersten Raum W1 zugeordnet und öffnet sich in diesen Raum W1 hinein. Die zweite Durchlassöffnung 154b hingegen ist dem zweiten Raum W2 zugeordnet und öffnet sich in diesen hinein. Bei der Bewegung des Abtriebselements 150 im Betrieb der Vorrichtung 100 fluchten die Durchlassöffnungen 154a, 154b phasenweise mit den Durchlassöffnungen 162a, 162b, 163a, 163b, die schlitzartig an dem Führungselement 160 ausgebildet sind. Die Durchlassöffnungen 162a, 162b sind hierbei beispielsweise der Durchlassöffnung 154b des zweiten Raums W2 zugeordnet und dienen zum Einlassen von Luft sowie zum Auslassen der Abgase nach dem Verbrennen des Brennstoffs in dem Raum W2. Entsprechend sind die Durchlassöffnungen 163a, 163b der Durchlassöffnung 154a des ersten Raumes W1 zugeordnet. Aufgrund der um die Drehachse D zueinander versetzten Anordnung der Durchlassöffnungen 154a, 154b an dem Abtriebselement 150 erfolgt das Einlassen und Auslassen des Fluids aus den Räumen W1, W2 in phasenversetzter Weise derart, dass beim Einlassen von Fluid in den einen Raum gleichzeitig Fluid aus dem anderen Raum ausgelassen wird.

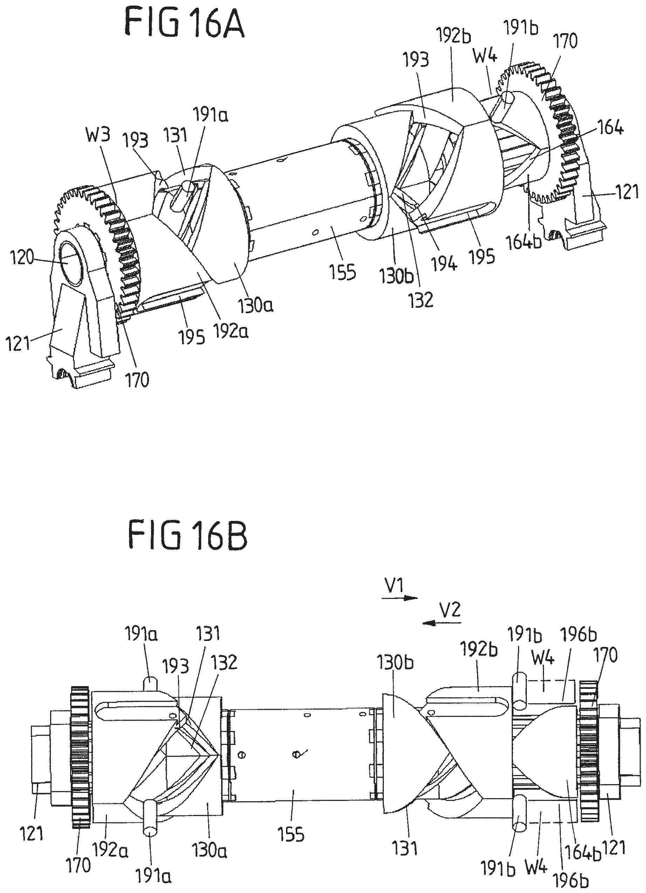

Fig. 10 bis 17 zeigen ein Ausführungsbeispiel einer Vorrichtung 100, das im Grundsatz eine ähnliche Funktionsweise wie die vorangehend beschriebene Vorrichtung aufweist, dabei aber zusätzlich Übertragungselemente 192a, 192b (siehe z.B. Fig. 16A, 16B) verwendet, die radial außerhalb der Führungsabschnitte 164a, 164b angeordnet sind, dabei aber verschieblich zum Führungselement 160 sind und bewegungsphasenabhängig eine zusätzliche Führung des Abtriebselements 150 relativ zu dem Führungselement 160 bereitstellen.

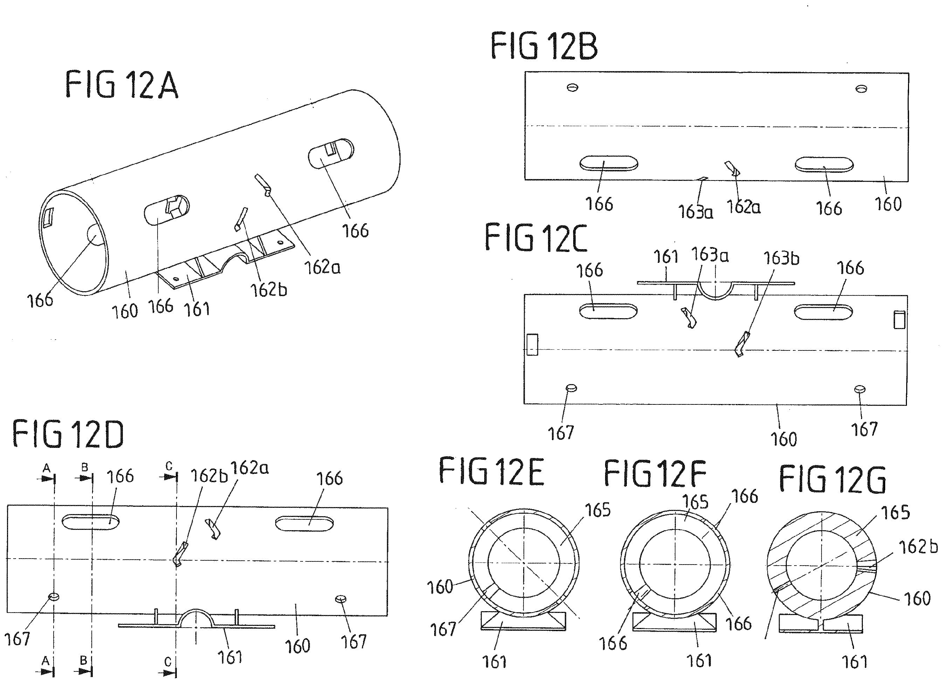

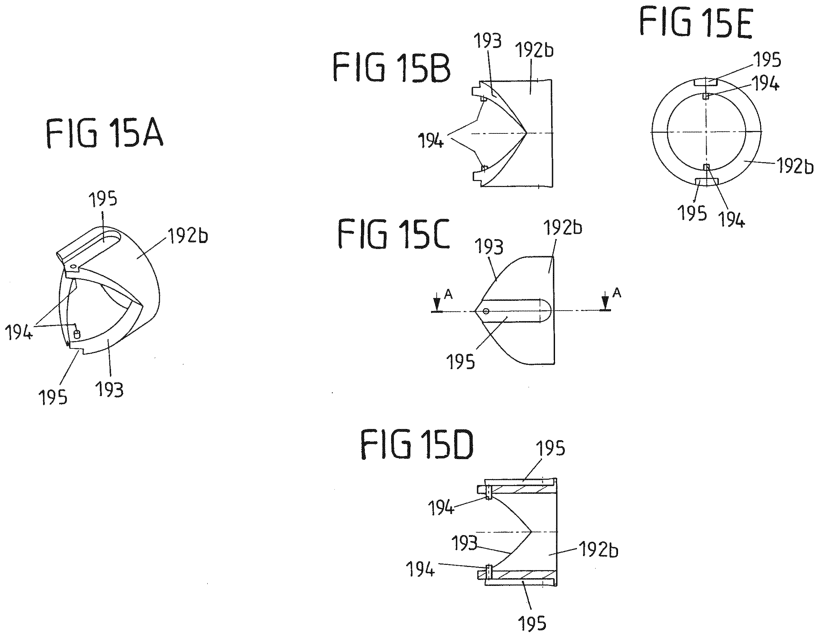

Wie aus Fig. 16A, 16B in Zusammenschau mit den gesonderten Ansichten gemäß Fig. 15A bis 15E ersichtlich ist, sind die Übertragungselemente 192a, 192b als zylindrische Hülsen ausgebildet, die über Führungsbahnen 195 und darin eingreifende, an Öffnungen 166 des Führungselements 160 (siehe Fig. 12A) gehaltene Längsführungselemente 190 längs entlang der Drehachse D an dem Führungselement 160 geführt sind. Die Übertragungselemente 192a, 192b sind axial beidseitig des Abtriebselements 150 angeordnet und wirken über jeweils eine Führungskontur 193 mit einem zugeordneten Übertragungsabschnitt 130a, 130b des Abtriebselements 150 zusammen. Die Übertragungsabschnitte 130a, 130b sind hierbei als radial vorstehende Abschnitte fest an den Endstücken 156a, 156b des Abtriebselements 150 angeordnet und weisen je eine abschnittsweise eine Helix nachbildende Führungskontur 131 auf, die gleitend in Anlage mit der Führungskontur 193 des jeweils zugeordneten Übertragungselements 192a, 192b ist.

Jedes Übertragungselement 192a, 192b steht über zwei Zapfen 194 mit einer Nut 132 an dem zugeordneten Endstück 156a, 156b des Abtriebselements 150 in Eingriff, so dass jedes Übertragungselement 192a, 192b mit dem Abtriebselement 150 zwangsgekoppelt ist.

Die Übertragungselemente 192a, 192b stellen eine bewegungsphasenabhängige zusätzliche Führung für das Abtriebselement 150 bereit, die dazu dient, insbesondere in einem Scheitelpunkt der periodischen Hubbewegung des Abtriebselements 150 eine effektive Umsetzung der Hubbewegung in eine Drehbewegung (bei Verwendung der Vorrichtung als Motor) oder umgekehrt einer Drehbewegung in eine Hubbewegung (z. B. bei Verwendung der Vorrichtung als Kompressor) zu ermöglichen.

Die Führung wirkt dabei zusätzlich zu der Führung, die über die feststehend an dem Führungselement 160 angeordneten Führungsabschnitte 164a, 164b bereitgestellt wird. Die Führungsabschnitte 164a, 164b sind feststehend zu dem Führungselement 160 angeordnet.

Die zusätzliche Führung über die Übertragungselemente 192a, 192b wird gesteuert über eine Feststelleinrichtung 191a, 191b in Form von an dem Führungselement 160 angeordneten Bolzen, die bewegungsphasenabhängig die Übertragungselemente 192a, 192b derart zu dem Führungselement 160 festsetzen, dass die Übertragungselemente 192a, 192b entweder nicht entlang der Drehachse mit dem Abtriebselement 150 mitbewegt werden können. Dies soll nachfolgend noch erläutert werden.

Das Übertragungselement 192a, 192b ist jeweils an einer Trennhülse 196a, 196b gleitend angeordnet und geführt. Die jeweils zugeordnete Trennhülse 196a, 196b ist fest mit dem Führungselement 160 verbunden und bildet ein Zwischenelement zwischen dem jeweiligen Übertragungselement 192a, 192b und dem radial innen dazu gelegenen Führungsabschnitt 164, 164b aus (der Führungsabschnitt 164a, 164b kann beispielsweise fest mit der jeweils zugeordneten Trennhülse 196a, 196b verbunden und darüber an dem Führungselement 160 gehalten sein.)

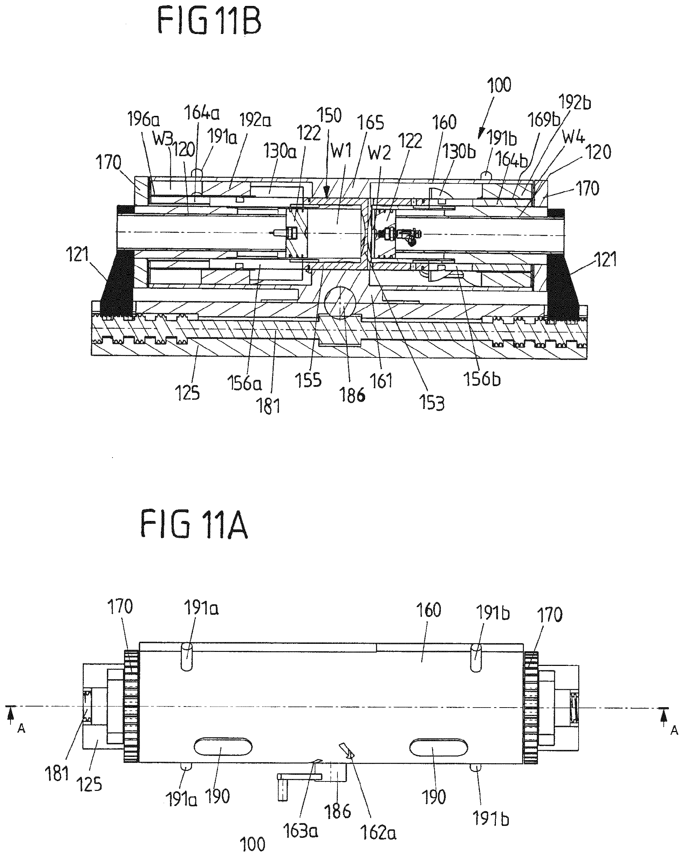

Jede Trennhülse 196a, 196b bildet zudem eine Trennung derart aus, dass jedes Übertragungselement 192a, 192b zusammen mit der Trennhülse 196a, 196b und dem Führungselement 160 (als radial äußerer Begrenzung) einen Raum W3, W4 (siehe Fig. 11B sowie Fig. 16A, 16B) begrenzt, der sich bei einer Hubbewegung des Übertragungselements 192a, 192b entlang der Drehachse D in seinem Volumen verändert. Dieser Raum W3, W4 kann dazu verwendet werden, ein Fluid, beispielsweise Luft, vor Einspeisung in den durch das Abtriebselement 150 und das Kolbenelement 122 begrenzten Raum W1, W2 vorzuverdichten, was den Vorteil hat, dass beispielsweise bei Verwendung der Vorrichtung 100 als Verbrennungsmotor ein bereits vorverdichtetes Fluid in den Raum W1, W2 zwischen Abtriebselement 150 und Kolbenelement 122 eingeleitet werden kann, was zu günstigen Brennbedingungen und einem erhöhten Wirkungsgrad des Verbrennungsmotors führen kann.

Dies ermöglicht beispielsweise, den Verbrennungsmotor als Zweitaktmotor im Zweitaktverfahren zu betreiben.

Setzt man die Vorrichtung 100 beispielsweise als Stirlingmotor ein, so kann das im Raum W3, W4 vorverdichtete Fluid in einem Zuführungskanal auch erhitzt werden, um dann in den Raum W1, W2 zwischen Abtriebselement 150 und Kolbenelement 122 eingeleitet zu werden, wo es dann das Abtriebselement 150 zu einer Hubbewegung entlang der Drehachse D antreibt.

Bei Einsatz der Vorrichtung 100 als Kompressor kann eine Vorverdichtung des Fluids in den Räumen W3, W4 ebenfalls vorteilhaft sein.

Abgesehen von den zusätzlich bereitgestellten Übertragungselementen 192a, 192b ist die Funktionsweise der Vorrichtung 100 ähnlich wie vorangehend anhand von Fig. 1 bis 9 beschrieben. Insbesondere ist auch eine Einstellvorrichtung 180 zum axialen Verstellen der Kolbenelemente 122 vorgesehen. Die Kolbenelemente 122 begrenzen zusammen mit dem Abtriebselement 150 zwei Kammern W1, W2 (siehe Fig. 11B), die bei der periodischen Hubbewegung des Abtriebselements 150 in periodischer Weise ihre Größe ändern. Die Kolbenelemente 122 gleiten jeweils in einer Gleithülse 140, die innerhalb des als zylindrische Hohlwelle ausgebildeten Abtriebselements 150 angeordnet sind. Die Kammern W1, W2 sind über eine mittige Trennwand 153 des Abtriebselements 150 voneinander getrennt.

Abgetrieben wird die Drehbewegung des Abtriebselements 150 bei dem dargestellten Ausführungsbeispiel über zwei beidseitig der Vorrichtung 100 angeordnete Abtriebsräder 170, die wie vorangehend beschrieben über einen Verzahnungseingriff axial verschieblich, aber drehfest mit dem Abtriebselement 150 gekoppelt sind.

Die Vorrichtung gemäß Fig. 10 bis 17 ist als Verbrennungsmotor ausgestaltet und weist hierzu eine Fluidzufuhr 111 auf, über die ein Brennstoff zum geeigneten Durchführen eines Brennvorgangs in den Kammern W1, W2 zugeführt wird. Zudem ist eine Abgasabfuhr 112 vorgesehen, die zum Abführen von Abgasen aus den Kammern W1, W2 nach einem Brennvorgang dient.

An dem Führungselement 160 sind, wie aus Fig. 12A bis 12G ersichtlich, Durchlassöffnungen 162a, 162b, 163a, 163b in Form von länglichen Schlitzen angeordnet, die bewegungsphasenabhängig mit Durchlassöffnungen 154a, 154b, 154a', 154b' in Wechselwirkung treten, so dass bewegungsphasenabhängig Brennstoff in die Kammern W1, W2 zugeführt und dort verbrannt werden kann und dabei entstehende Abgase wieder abgeleitet werden können. Die Durchlassöffnungen 162a, 162b sind hierbei der Abgasabfuhr 112 zugeordnet (siehe Fig. 10B), während die Durchlassöffnungen 163a, 163b der Fluidzufuhr 111 zugeordnet sind. Gelangen die Durchlassöffnungen 154a, 154b, 154a', 154b' am Abtriebselement 150 in den Bereich der Durchlassöffnungen 162a, 162b, 163a, 163b, so wird bewegungsphasenabhängig ein Durchlass zum Zuführen eines Fluids bzw. zum Abführen von Abgasen bereitgestellt, so dass die Durchlassöffnungen die Funktion eines Ventils übernehmen.

Die Durchlassöffnungen 154a', 154b' des Abtriebselements 150 sind hierbei den Durchlassöffnungen 163a, 163b des Führungselements 160 zugeordnet und dienen zum Abführen von Abgasen aus den Kammern W1, W2. Die Durchlassöffnungen 154a, 154b des Abtriebselements 150 sind den Durchlassöffnungen 162a, 162b des Führungselements 160 zugeordnet und dienen zum Zuführen von Brennstoff.

Durch die Bereitstellung der Durchlassöffnungen 154a, 154b, 154a', 154b', 162a, 162b, 163a, 163b in der dargestellten Weise kann die Vorrichtung 100 als Zweitakt-Motor betrieben werden, bei dem in bekannter Weise in zwei Takten Luft im Brennraum komprimiert, Brennstoff zugeführt und verbrannt sowie Abgase wieder abgeleitet werden.

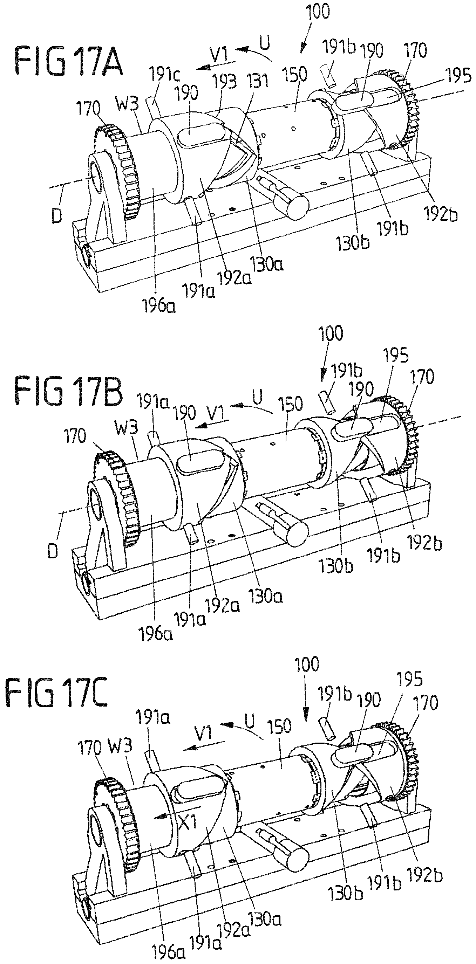

Die Betriebsweise der Vorrichtung 100 soll nachfolgend anhand von Fig. 17A bis 17I beschrieben werden.

Fig. 17A bis 17I zeigen die Vorrichtung 100 in unterschiedlichen Bewegungszuständen bei Antreiben des Abtriebselements 150. Das Abtriebselement 150 führt dabei eine Drehbewegung in eine Drehrichtung U um die Drehachse D aus, die - bei Verwendung der Vorrichtung 100 beispielsweise als Verbrennungsmotor - angetrieben wird durch eine Hubbewegung des Abtriebselements 150 entlang der Drehachse D. Die Hubbewegung ist periodisch und entspricht somit einer periodischen Hin- und Rückbewegung entlang der Drehachse D. Die Drehbewegung ist gleichförmig in die Drehrichtung U und wird über die Abtriebsräder 170 abgetrieben, um ein anzutreibendes Bauteil, beispielsweise die Räder eines Fahrzeugs, anzutreiben.

Die Betriebsweise der Vorrichtung 100 soll nachfolgend anhand der Paarung des Übertragungsabschnitts 130a und des Übertragungselements 192a (in Fig. 17A bis 17I links) erläutert werden. Das Zusammenwirken des anderen Übertragungsabschnitts 130b mit dem zugeordneten Übertragungselement 192b ist identisch, aber phasenversetzt.

In dem in Fig. 17A dargestellten Bewegungszustand dreht sich das Abtriebselement 150 in die Drehrichtung U und bewegt sich gleichzeitig in die Bewegungsrichtung V1. Der Zustand gemäß Fig. 17A kann beispielsweise dem Zustand entsprechen, in dem der durch ein Kolbenelement 122 und das Abtriebselement 150 begrenzte Raum W1 (siehe Fig. 11B) minimal ist, ein Fluid in dem Raum W1 somit komprimiert ist und infolge eines Verbrennungsvorgangs eines geeigneten Brennstoffs sich das Volumen des Raums W1 explosionsartig ausdehnt, so dass das Abtriebselement 150 in die Bewegungsrichtung V1 angetrieben wird.

In dem Bewegungszustand gemäß Fig. 17A wird das Übertragungselement 192a (in Fig. 17A links) durch die Feststelleinrichtung 191a ortsfest an dem Führungselement 160 gehalten. Dadurch, dass das Übertragungselement 192a festgehalten wird, gleitet der Übertragungsabschnitt 130a des Abtriebselements 150 mit seiner Führungskontur 131 an der Führungskontur 193 des Übertragungselements 192a entlang, wobei aufgrund der helixförmigen, geneigten Ausgestaltung der Führungskonturen 131, 193 die Hubbewegung des Abtriebselements 150 in eine Drehbewegung in die Drehrichtung U um die Drehachse D umgesetzt wird.

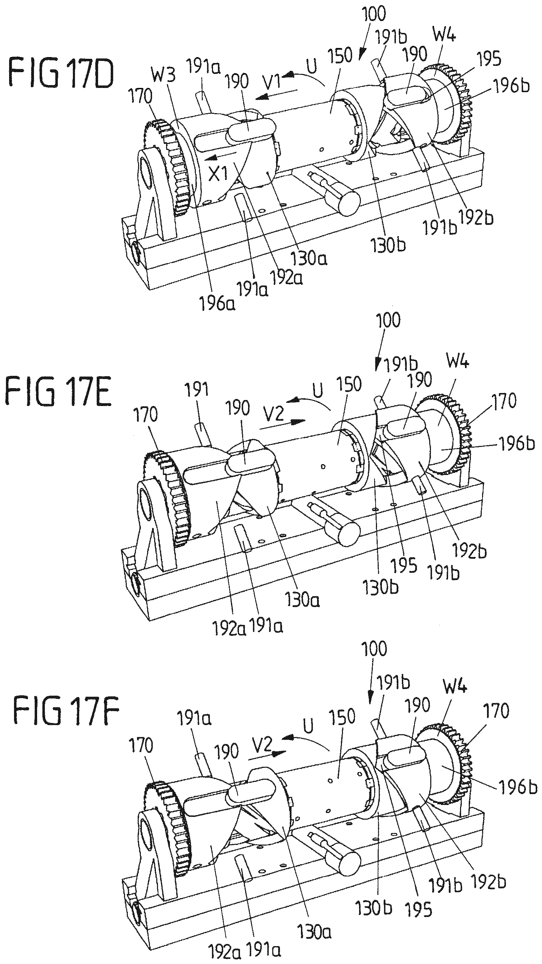

Dadurch, dass das Abtriebselement 150 in die Bewegungsrichtung V1 angetrieben wird, gleitet der Übertragungsabschnitt 130a am (festgehaltenen) Übertragungselement 192a entlang, wie dies in Fig. 17B dargestellt ist, bis der in Fig. 17C dargestellte Bewegungszustand erreicht ist, in dem der Eingriff der durch die Bolzen gebildeten Feststelleinrichtung 191a mit dem Übertragungselement 192a aufgehoben und das Übertragungselement 192a somit freigegeben wird. Das Übertragungselement 192a bewegt sich in der weiteren Bewegung mit dem Abtriebselement 150 mit und wird in die Bewegungsrichtung X1 verschoben, wobei das Übertragungselement 192a mit seiner Führungskontur 193 an der Führungskontur 131 des Übertragungsabschnitts 130a des Abtriebselements 150 gleitet und dadurch schneller in die Bewegungsrichtung X1 bewegt wird als das Abtriebselement 150, so dass sich das Übertragungselement 192a, wie in Fig. 17D dargestellt, von dem Übertragungsabschnitt 130a des Abtriebselements 150 entfernt.

Aufgrund der Bewegung des Übertragungselements 192a in die Bewegungsrichtung X1 wird der durch das Übertragungselement 192a, die Trennhülse 196a und das Führungselement 160 begrenzte Raum W3 verkleinert, so dass ein in dem Raum W3 befindliches Fluid zum Zwecke der Vorverdichtung komprimiert werden kann.

Hat das Übertragungselement 192a seine dem zugeordneten Abtriebsrad 170 angenäherte Endlage erreicht, erreicht auch das Abtriebselement 150 seine dem Scheitelpunkt der Hubbewegung entsprechende Endlage und wechselt seine Bewegungsrichtung. Dies ist in Fig. 17E dargestellt. Das Übertragungselement 192a verbleibt dabei (zunächst) in seiner Endlage (bei minimalem Raum W3), und das Abtriebselement 150 bewegt sich mit seinem Übertragungsabschnitt 130a in die der Bewegungsrichtung V1 entgegensetzte Bewegungsrichtung V2, wobei weiterhin der Übertragungsabschnitt 130a mit seiner Führungskontur 131 an der Führungskontur 193 des Übertragungselements 192a entlang gleitet.

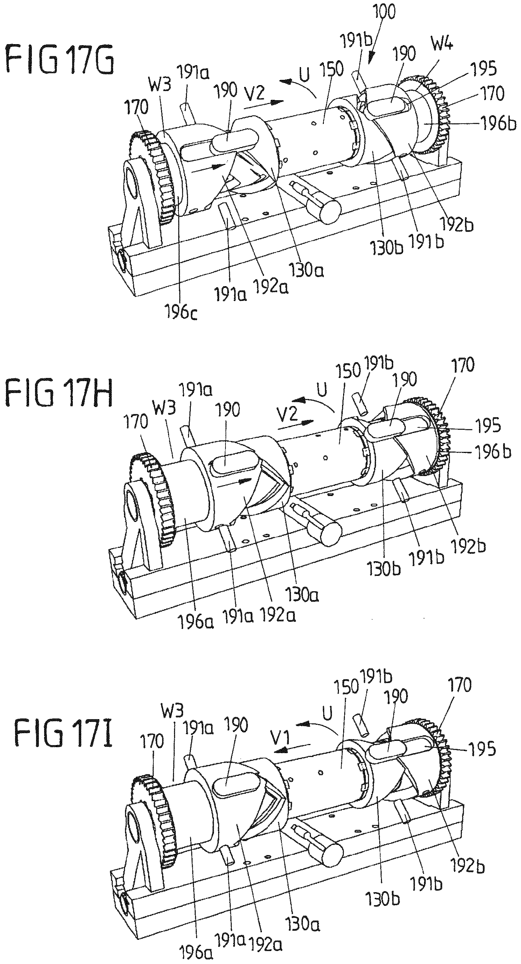

Ist der in Fig. 17F dargestellte Zustand erreicht, in dem eine entlang der Drehachse D auf das Übertragungselement 192a zuweisende Spitze der Führungskontur 131 des Übertragungsabschnitts 130a sich im Bereich einer entgegengesetzt weisenden Spitze der Führungskontur 193 des Übertragungselements 192a befindet, so wird bei weiterer Bewegung des Abtriebselements 150 in die Bewegungsrichtung V2 das Übertragungselement 192a - bedingt durch die Zwangskopplung zwischen dem Endstück 156a des Abtriebselements 150 und dem Übertragungselement 192a durch den Eingriff der Zapfen 194 des Übertragungselements 192a (siehe Fig. 15A) in die Nut 132 am Endstück 156a des Abtriebselements 150 - in die Bewegungsrichtung X2 mit dem Abtriebselement 150 mitbewegt und dadurch dem Abtriebselement 150 angenähert. Das Übertragungselement 192a steht dabei über seine Führungskontur 193 gleitend in Anlage mit der Führungskontur 131 des Führungsabschnitts 130a und bewegt sich in die Bewegungsrichtung X2 (Fig. 17H), bis das Übertragungselement 192a in der in Fig. 17I erreichten Stelle wiederum mittels der Feststelleinrichtung 191a relativ zum Führungselement 160 festgesetzt wird und somit axial zu dem Führungselement 160 festgehalten ist.

Ändert das Abtriebselement 150 nach Erreichen seiner dem anderen Scheitelpunkt der Hubbewegung entsprechenden Endlage wiederum seine Hubrichtung und bewegt sich somit in die Bewegungsrichtung V1, so gleitet der Führungsabschnitt 130a mit seiner Führungskontur 131 wiederum an der Führungskontur 193 des Übertragungselements 192a entlang, so dass die durch einen erneuten Verbrennungsvorgang angetriebene Hubbewegung in die Drehbewegung umgesetzt wird.

In unterschiedlichen Bewegungsphasen wird das Übertragungselement 192a somit an dem Führungselement 160 festgehalten oder zusammen mit dem Abtriebselement 150 bewegt.

In einer ersten Bewegungsphase (entsprechend den Bewegungszuständen gemäß Fig. 17A und 17B) ist das Übertragungselement 192a mittels der Feststelleinrichtung 191a an dem Führungselement 160 festgesetzt, so dass das Übertragungselement 192a eine Anlage für das Abtriebselement 150 mit dessen Führungsabschnitt 130a und der daran angeordneten Führungskontur 131 bietet, die die Hubbewegung des Abtriebselements 150 in die Bewegungsrichtung V1 zuverlässig und günstig in eine Drehbewegung in die Drehrichtung U umsetzt.

In einer zweiten Bewegungsphase, entsprechend Fig. 17C und 17D, ist das Übertragungselement 192a freigegeben und bewegt sich zusammen mit dem Abtriebselement 150 in die Bewegungsrichtung X1.

In einer dritten Bewegungsphase, entsprechend Fig. 17E und 17F, verbleibt das Übertragungselement 192a in seiner erreichten Endlage, in der es dem Abtriebsrad 170 angenähert ist, während sich das Abtriebselement 150 in die entgegengesetzte Bewegungsrichtung V2 zurückbewegt.

In einer vierten Bewegungsphase, entsprechend Fig. 17G und 17H, wird das Übertragungselement 192a mit dem Abtriebselement 150 mitbewegt und nähert sich dem Abtriebselement 150 somit wieder an, bis es wiederum mittels der Feststelleinrichtung 191a an dem Führungselement 160 festgesetzt wird und die Vorrichtung erneut in ihre erste Bewegungsphase eintritt.

Die Wirkung des Übertragungselements 192b am anderen axialen Ende der Vorrichtung 100 ist identisch, jedoch phasenversetzt zum Übertragungselement 192a. Das Übertragungselement 192b wirkt mit dem ihm zugeordneten Führungsabschnitt 130b am Endstück 156b des Abtriebselements 150 zusammen.

Die grundsätzliche Führung des Abtriebselements 150 relativ zum Führungselement 160 wird durch die Führung der Endstücke 156a, 156b an den feststehenden Führungsabschnitten 164a, 164b des Führungselements 160 bereitgestellt (siehe z.B. Fig. 3). Durch Bereitstellen der zusätzlichen Übertragungselemente 192a, 192b wird jedoch insbesondere in solchen Bewegungszuständen, in denen die Führungskontur 157 eines Endstücks 156a, 156b mit einer Spitze gerade im Bereich einer Spitze der zugeordneten Führungskontur 164 des zugeordneten Führungsabschnitts 164a, 164b steht (siehe Fig. 3 links), eine vorteilhafte Führung bereitgestellt, weil es insbesondere in solchen Bewegungszuständen zu einer flächigen Anlage der Führungskontur 131 des Führungsabschnitts 130a, 130b mit der Führungskontur 193 des zugeordneten Übertragungselements 192a, 192b kommt.

Beispielsweise steht in dem Bewegungszustand gemäß Fig. 17A das Endstück 156a gerade spitz-auf-spitz mit dem Führungsabschnitt 164A. In diesem Bewegungszustand liegt der Führungsabschnitt 130a jedoch flächig an dem zugeordneten Übertragungselement 192a an, und dadurch, dass das Übertragungselement 192a relativ zu dem Führungselement 160 festgehalten ist, wird eine zusätzliche Abstützung des Abtriebselements 150 relativ zum Führungselement 160 bereitgestellt und somit eine günstige Umsetzung der Hubbewegung in die Drehbewegung um die Drehachse D bewirkt.

Die Endstücke 156a, 156b sowie auch die Führungsabschnitte 164a, 164b, die Übertragungsabschnitte 130a, 130B und die Übertragungselemente 192a, 192b weisen in ihren Führungskonturen 157, 164, 131, 193 - betrachtet in Umfangsrichtung um die Drehachse D - zwei Spitzen auf, so dass sich eine Periodizität in Umfangsrichtung von 180° ergibt. Eine komplette Hubbewegung (Hin- und Rückbewegung) bewirkt somit eine halbe Umdrehung des Abtriebselements 150. Für eine vollständige Umdrehung bewegt sich das Abtriebselement 150 zweimal hin und zurück und führt somit zwei Hubvorgänge aus.

Denkbar ist auch, dass das Abtriebselement pro Umdrehung nur eine Hubbewegung oder mehr als zwei, beispielsweise vier oder sechs Hubbewegungen ausführt. Die Anzahl der Hubbewegungen pro Umdrehung ist beispielsweise abhängig von der Dimensionierung des Drehmoments zu wählen, und entsprechend sind die Führungskonturen 157, 164, 131, 193 auszugestalten.

Wie bereits gesagt, ändern sich bei Bewegen der Übertragungselemente 192a, 192b die ihnen zugeordneten Räume W3, W4. Diese Räume W3, W4 können zur Vorverdichtung eines Fluids vor Einspeisen des Fluids in die durch das Abtriebselement 150 und die Kolbenelemente 122 begrenzten Räume W1, W2 verwendet werden.

### Bezugszeichenliste

- 100: Vorrichtung
- 101: Einlassventil
- 102: Auslassventil
- 103: Zündkerze
- 104: Einspritzdüse
- 111: Fluidzufuhr
- 112: Abgasabfuhr
- 120: Welle
- 121: Halterung
- 122: Kolbenelement
- 125: Basisteil
- 126: Gewindeabschnitt
- 127: Führungsstege
- 128: Dichtungsringe
- 129: Bohrung
- 130a, 130b: Übertragungsabschnitt
- 131: Führungskontur
- 132: Nut
- 140: Gleithülse
- 150: Abtriebselement
- 153: Wand
- 154a, 154b: Durchlassöffnung
- 155: Hohlwellenelement
- 156a, 156b: Endstück
- 157: Führungskontur
- 158: Innenverzahnung
- 159: Formschlusselemente
- 160: Führungselement
- 161: Fuß
- 162a, 162b, 163a, 163b: Durchlassöffnung
- 164a, 164b: Führungsabschnitt
- 164: Führungskontur
- 165: Lagerabschnitt
- 166: Öffnung
- 170: Abtriebsrad
- 171: Kopplungshülse
- 172: Außenverzahnung
- 180: Einstellvorrichtung
- 181: Spindel
- 182: Außengewinde
- 183: Ringförmige Stege
- 184: Verzahnungsabschnitt
- 185: Schneckenverzahnung
- 186: Betätigungsmittel
- 190: Längsführungseinrichtung
- 191a, 191b: Feststelleinrichtung
- 192a, 192b: Übertragungselement
- 193: Führungskontur
- 194: Zapfen
- 195: Führungsbahn
- 196a, 196b: Trennhülse
- D: Drehachse
- S0, S1, S2: Verstellrichtung
- T: Drehbewegung
- U: Drehrichtung
- V1, V2: Richtung
- W1, W2, W3, W4: Raum
- X1, X2: Bewegungsrichtung

## Patentansprüche

1. Vorrichtung (100) zum Erzeugen oder Wandeln eines Drehmoments, mit
- einem Kolbenelement (122),
- einem relativ zum Kolbenelement (122) um eine Drehachse (D) drehbaren Abtriebselement (150) und
- einem Führungselement (160), das das Abtriebselement (150) derart führt, dass das Abtriebselement (150) im Betrieb der Vorrichtung (100) bei Antreiben des Abtriebselements (150) gleichzeitig eine Drehbewegung (T) um die Drehachse (D) und eine lineare Bewegung in Form einer periodischen Hubbewegung entlang der Drehachse (D) relativ zum Kolbenelement (122) ausführt, wobei das Kolbenelement (122) und das Abtriebselement (150) einen Raum begrenzen, dessen Volumen sich bei linearer Bewegung des Abtriebselements (150) relativ zum Kolbenelement (122) periodisch verändert,
**gekennzeichnet durch**
ein entlang der Drehachse (D) verschiebbar an dem Führungselement (160) geführtes Übertragungselement (192a, 192b), das mit dem Abtriebselement (150) in Anlage ist und während einer Periode der periodischen Hubbewegung des Abtriebselements in einer ersten Bewegungsphase ortsfest zu dem Führungselement (160) gehalten und in einer zweiten Bewegungsphase zusammen mit dem Abtriebselement entlang der Drehachse (D) bewegt wird.

2. Vorrichtung (100) nach Anspruch 1, **dadurch gekennzeichnet, dass** das Abtriebselement (150) über eine erste Führungskontur (157) an einem Führungsabschnitt (164a, 164b) des Führungselements (160) geführt ist, wobei die erste Führungskontur (157) bei linearer Bewegung des Abtriebselements (150) entlang der Drehachse (D, D') das Abtriebselement (150) in eine Drehbewegung um die Drehachse (D, D') zwingt.

3. Vorrichtung (100) nach Anspruch 2, **dadurch gekennzeichnet, dass** das Abtriebselement (150) über eine zweite Führungskontur (131) an dem Übertragungselement (192a, 192b) geführt ist.

4. Vorrichtung (100) nach Anspruch 3, **dadurch gekennzeichnet, dass** die erste Führungskontur (157) und die zweite Führungskontur (131) radial zur Drehachse (D) zueinander versetzt sind.

5. Vorrichtung (100) nach einem der vorangehenden Ansprüche, **dadurch gekennzeichnet, dass** das Übertragungselement (192a, 192b) an dem Abtriebselement (150) zwangsgeführt ist.

6. Vorrichtung (100) nach einem der vorangehenden Ansprüche, **dadurch gekennzeichnet, dass** das Führungselement (160) eine Feststelleinrichtung (191a, 191b) zum Feststellen des Übertragungselements (192a, 192b) an dem Führungselement (160) in Abhängigkeit von einer axialen Position des Abtriebselements (150) entlang der Drehachse (D) aufweist.

7. Vorrichtung (100) nach einem der vorangehenden Ansprüche, **dadurch gekennzeichnet, dass** das Kolbenelement (122) und das Abtriebselement (150) einen Raum (W1, W2) begrenzen, dessen Volumen sich bei der linearen Bewegung (C) des Abtriebselements (150) relativ zum Kolbenelement (122) periodisch verändert.

8. Vorrichtung (100) nach Anspruch 7, **dadurch gekennzeichnet, dass** das Übertragungselement (192a, 192b) zusammen mit dem Führungselement (160) einen weiteren, zweiten Raum (W3, W4) begrenzt, dessen Volumen sich bei der Bewegung des Übertragungselements (192a, 192b) ändert.

9. Vorrichtung (100) nach einem der vorangehenden Ansprüche, **dadurch gekennzeichnet, dass** in der ersten Bewegungsphase das Abtriebselement (150) aus einer ersten Endlage in eine erste Richtung (V1) entlang der Drehachse (D) bewegt wird und dabei an dem festgehaltenen Übertragungselement (192a, 192b) derart geführt ist, dass das Abtriebselement (150) in eine Drehbewegung um die Drehachse (D) versetzt wird.

10. Vorrichtung (100) nach Anspruch 9, **dadurch gekennzeichnet, dass** ab einer vorbestimmten axialen Position des Abtriebselements (150) das Übertragungselement (192a, 192b) in der zweiten Bewegungsphase zusammen mit dem Abtriebselement (150) in die erste Richtung (V1) entlang der Drehachse (D) bewegt wird.

11. Vorrichtung (100) nach Anspruch 10, **dadurch gekennzeichnet, dass** in einer dritten Bewegungsphase nach Erreichen einer zweiten Endlage das Abtriebselement (150) in eine der ersten Richtung (V1) entgegengesetzte, zweite Richtung (V2) bewegt wird und dabei das Übertragungselement (192a, 192b) in einer zum Führungselement (160) ortsfesten Stellung verbleibt.

12. Vorrichtung (100) nach Anspruch 11, **dadurch gekennzeichnet, dass** in einer vierten Bewegungsphase das Abtriebselement (150) das Übertragungselement (192a, 192b) in die zweite Richtung (V2) mitnimmt, bis das Abtriebselement (150) die erste Endlage erreicht.

13. Vorrichtung (100) nach einem der vorangehenden Ansprüche, **dadurch gekennzeichnet, dass** das Führungselement (160) als zylindrische Hohlwelle ausgestaltet ist, in der das zylindrisch ausgebildete Abtriebselement (150) geführt ist.

14. Vorrichtung (100) nach Anspruch 13, **dadurch gekennzeichnet, dass** das Abtriebselement (150) axial zwischen zwei an dem Führungselement (160) angeordneten Führungsabschnitten (163a, 163b) angeordnet ist, wobei jeder Führungsabschnitt (163a, 163b) an einer dem Abtriebselement (150) zugewandten Stirnseite eine Führungskontur (164) ausbildet, die mit einer zugeordneten Führungskontur (157) an einer Stirnseite des Abtriebselements (150) in Anlage ist.

15. Vorrichtung (100) nach einem der vorangehenden Ansprüche, **dadurch gekennzeichnet, dass** das Abtriebselement (150) mit zwei Kolbenelementen (122) zusammenwirkt und zusammen mit den zwei Kolbenelementen (122) zwei Räume (W1, W2) ausbildet.

## Claims

1. Device (100) for generating or converting a torque, having
- a piston element (122),
- an output element (150) which is rotatable relative to the piston element (122) about an axis of rotation (D), and
- a guide element (160) which guides the output element (150) in such a manner that, during the operation of the device (100), when the output element (150) is driven, the output element (150) simultaneously executes a rotational movement (T) about the axis of rotation (D) and a linear movement in the form of a periodic stroke movement along the axis of rotation (D) relative to the piston element (122), wherein the piston element (122) and the output element (150) bound a space, the volume of which periodically changes during the linear movement of the output element (150) relative to the piston element (122),
**characterized by**
a transmission element (192a, 192b) which is guided on the guide element (160) displaceably along the axis of rotation (D), is in contact with the output element (150) and, during a period of the periodic stroke movement of the output element, is held in a positionally fixed manner with respect to the guide element (160) in a first movement phase and, in a second movement phase, is moved together with the output element along the axis of rotation (D).

2. Device (100) according to Claim 1, **characterized in that** the output element (150) is guided on a guide portion (164a, 164b) of the guide element (160) via a first guide contour (157), wherein, during the linear movement of the output element (150) along the axis of rotation (D, D'), the first guide contour (157) forces the output element (150) into a rotational movement about the axis of rotation (D, D').

3. Device (100) according to Claim 2, **characterized in that** the output element (150) is guided on the transmission element (192a, 192b) via a second guide contour (131).

4. Device (100) according to Claim 3, **characterized in that** the first guide contour (157) and the second guide contour (131) are offset with respect to each other radially with respect to the axis of rotation (D).

5. Device (100) according to one of the preceding claims, **characterized in that** the transmission element (192a, 192b) is forcibly guided on the output element (150).

6. Device (100) according to one of the preceding claims, **characterized in that** the guide element (160) has a fixing device (191a, 191b) for fixing the transmission element (192a, 192b) on the guide element (160) depending on an axial position of the output element (150) along the axis of rotation (D).

7. Device (100) according to one of the preceding claims, **characterized in that** the piston element (122) and the output element (150) bound a space (W1, W2), the volume of which periodically changes during the linear movement (C) of the output element (150) relative to the piston element (122) .

8. Device (100) according to Claim 7, **characterized in that** the transmission element (192a, 192b) together with the guide element (160) bounds a further, second space (W3, W4), the volume of which changes during the movement of the transmission element (192a, 192b).

9. Device (100) according to one of the preceding claims, **characterized in that**, in the first movement phase, the output element (150) is moved out of a first end position along the axis of rotation (D) in a first direction (V1) and, in the process, is guided on the secured transmission element (192a, 192b) in such a manner that the output element (150) is set into a rotational movement about the axis of rotation (D).

10. Device (100) according to Claim 9, **characterized in that**, from a predetermined axial position of the output element (150), the transmission element (192a, 192b) in the second movement phase is moved together with the output element (150) along the axis of rotation (D) in a first direction (V1).

11. Device (100) according to Claim 10, **characterized in that**, in a third movement phase, after reaching a second end position, the output element (150) is moved in a second direction (V2) opposite to the first direction (V1) and the transmission element (192a, 192b) remains here in a position fixed with respect to the guide element (160).

12. Device (100) according to Claim 11, **characterized in that**, in a fourth movement phase, the output element (150) carries along the transmission element (192a, 192b) in the second direction (V2) until the output element (150) reaches the first end position.

13. Device (100) according to one of the preceding claims, **characterized in that** the guide element (160) is configured as a cylindrical hollow shaft in which the cylindrically formed output element (150) is guided.

14. Device (100) according to Claim 13, **characterized in that** the output element (150) is arranged axially between two guide portions (163a, 163b) arranged on the guide element (160), wherein each guide portion (163a, 163b) forms a guide contour (164) on an end side facing the output element (150), said guide contour being in contact with an associated guide contour (157) on an end side of the output element (150).

15. Device (100) according to one of the preceding claims, **characterized in that** the output element (150) interacts with two piston elements (122) and, together with the two piston elements (122), forms two spaces (W1, W2).

## Revendications

1. Dispositif (100) pour produire ou convertir un couple, comprenant :
- un élément de piston (122),
- un élément de prise de force (150) pouvant tourner par rapport à l'élément de piston (122) autour d'un axe de rotation (D) et
- un élément de guidage (160) qui guide l'élément de prise de force (150) de telle sorte que l'élément de prise de force (150), pendant le fonctionnement du dispositif (100) lors de l'entraînement de l'élément de prise de force (150), effectue simultanément un mouvement de rotation (T) autour de l'axe de rotation (D) et un mouvement linéaire sous la forme d'un mouvement de course périodique le long de l'axe de rotation (D) par rapport à l'élément de piston (122), dans lequel l'élément de piston (122) et l'élément de prise de force (150) délimitant un espace dont le volume varie périodiquement lors du mouvement linéaire de l'élément de prise de force (150) par rapport à l'élément de piston (122),
**caractérisé par**
un élément de transfert (192a, 192b) guidé de manière déplaçable le long de l'axe de rotation (D) sur l'élément de guidage (160), qui est en contact avec l'élément de prise de force (150) et qui, pendant une période du mouvement de course périodique de l'élément de prise de force, dans une première phase de mouvement, est retenu fixement par rapport à l'élément de guidage (160) et qui, dans une deuxième phase de mouvement, est déplacé conjointement avec l'élément de prise de force le long de l'axe de rotation (D).

2. Dispositif (100) selon la revendication 1, **caractérisé en ce que** l'élément de prise de force (150) est guidé par le biais d'un premier contour de guidage (157) sur une portion de guidage (164a, 164b) de l'élément de guidage (160), dans lequel le premier contour de guidage (157), lors du mouvement linéaire de l'élément de prise de force (150) le long de l'axe de rotation (D, D'), forçant l'élément de prise de force (150) dans un mouvement de rotation autour de l'axe de rotation (D, D').

3. Dispositif (100) selon la revendication 2, **caractérisé en ce que** l'élément de prise de force (150) est guidé par le biais d'un deuxième contour de guidage (131) sur l'élément de transmission (192a, 192b).

4. Dispositif (100) selon la revendication 3, **caractérisé en ce que** le premier contour de guidage (157) et le deuxième contour de guidage (131) sont décalés l'un par rapport à l'autre radialement par rapport à l'axe de rotation (D).

5. Dispositif (100) selon l'une quelconque des revendications précédentes, **caractérisé en ce que** l'élément de transmission (192a, 192b) est guidé par force sur l'élément de prise de force (150).

6. Dispositif (100) selon l'une quelconque des revendications précédentes, **caractérisé en ce que** l'élément de guidage (160) présente un dispositif de fixation (191a, 191b) pour fixer l'élément de transmission (192a, 192b) sur l'élément de guidage (160) en fonction d'une position axiale de l'élément de prise de force (150) le long de l'axe de rotation (D) .

7. Dispositif (100) selon l'une quelconque des revendications précédentes, **caractérisé en ce que** l'élément de piston (122) et l'élément de prise de force (150) délimitent un espace (W1, W2) dont le volume varie périodiquement lors du mouvement linéaire (C) de l'élément de prise de force (150) par rapport à l'élément de piston (122).

8. Dispositif (100) selon la revendication 7, **caractérisé en ce que** l'élément de transmission (192a, 192b) délimite conjointement avec l'élément de guidage (160) un autre deuxième espace (W3, W4) dont le volume varie lors du mouvement de l'élément de transmission (192a, 192b).

9. Dispositif (100) selon l'une quelconque des revendications précédentes, **caractérisé en ce que** dans la première phase de mouvement, l'élément de prise de force (150) est déplacé d'une première position finale dans une première direction (V1) le long de l'axe de rotation (D) et est en l'occurrence guidé sur l'élément de transmission fixe (192a, 192b) de telle sorte que l'élément de prise de force (150) soit mis dans un mouvement de rotation autour de l'axe de rotation (D).

10. Dispositif (100) selon la revendication 9, **caractérisé en ce qu'**à partir d'une position axiale prédéterminée de l'élément de prise de force (150), l'élément de transmission (192a, 192b) est déplacé dans la deuxième phase de mouvement conjointement avec l'élément de prise de force (150) dans la première direction (V1) le long de l'axe de rotation (D) .

11. Dispositif (100) selon la revendication 10, **caractérisé en ce que** dans une troisième phase de mouvement, après qu'une deuxième position finale a été atteinte, l'élément de prise de force (150) est déplacé dans une deuxième direction (V2) opposée à la première direction (V1) et l'élément de transmission (192a, 192b) reste en l'occurrence dans une position fixe par rapport à l'élément de guidage (160) .

12. Dispositif (100) selon la revendication 11, **caractérisé en ce que** dans une quatrième phase de mouvement, l'élément de prise de force (150) entraîne l'élément de transmission (192a, 192b) dans la deuxième direction (V2) jusqu'à ce que l'élément de prise de force (150) atteigne la première position finale.

13. Dispositif (100) selon l'une quelconque des revendications précédentes, **caractérisé en ce que** l'élément de guidage (160) est réalisé sous forme d'arbre creux cylindrique dans lequel est guidé l'élément de prise de force (150) réalisé sous forme cylindrique.

14. Dispositif (100) selon la revendication 13, **caractérisé en ce que** l'élément de prise de force (150) est disposé axialement entre deux portions de guidage (163a, 163b) disposées sur l'élément de guidage (160), chaque portion de guidage (163a, 163b) constituant, au niveau d'un côté frontal tourné vers l'élément de prise de force (150), un contour de guidage (164) qui est en contact avec un contour de guidage associé (157) contre un côté frontal de l'élément de prise de force (150).

15. Dispositif (100) selon l'une quelconque des revendications précédentes, **caractérisé en ce que** l'élément de prise de force (150) coopère avec deux éléments de piston (122) et constitue conjointement avec les deux éléments de piston (122) deux espaces (W1, W2).
